# EUROPEAN PATENT APPLICATION

(11) **EP 4 772 907 A1**
(43) Date of publication of application: **08.07.2026**
(21) Application number: 23950857.5
(22) Date of filing: 22.11.2023
(51) Int. Cl.: G01S 13/86, G01S 13/931

(54) **INFORMATION PROCESSING DEVICE, INFORMATION PROCESSING METHOD, AND PROGRAM**

(30) Priority: 29.08.2023 US 202363579462 P
(71) Applicant: Sony Group Corporation, Tokyo 108-0075 (JP)
(72) Inventor: NONAKA, Soma, Atsugi-shi, Kanagawa 243-0014 (JP); SUTOU, Yasuhiro, Atsugi-shi, Kanagawa 243-0014 (JP); MOTOYAMA, Takuto, Atsugi-shi, Kanagawa 243-0014 (JP); TIAN, Guifen, Atsugi-shi, Kanagawa 243-0014 (JP); YAMAZAKI, Toshio, Atsugi-shi, Kanagawa 243-0014 (JP); OISHI, Kei, Atsugi-shi, Kanagawa 243-0014 (JP); YANG, Seungha, Atsugi-shi, Kanagawa 243-0014 (JP); SASAKI, Toshiyuki, Atsugi-shi, Kanagawa 243-0014 (JP); DOBA, Kentaro, Atsugi-shi, Kanagawa 243-0014 (JP)
(74) Representative: 2SPL Patentanwälte PartG mbB
(86) International application number: PCT/JP2023/042066
(87) International publication number: WO 2025/046916

(57) **Abstract**

In a case where a positional deviation has occurred in a sensor, the influence by the positional deviation of the sensor is further reduced.

An information processing apparatus includes a calculation unit that calculates a positional deviation amount of each of a plurality of sensors of different types, a recognition unit that executes a recognition task by integrating pieces of sensing data acquired by the plurality of sensors, and a processing unit that performs mask processing on a partial region of a recognition result of the recognition task on the basis of the positional deviation amount.

## Description

### TECHNICAL FIELD

The present disclosure relates to an information processing apparatus, an information processing method, and a program.

### BACKGROUND ART

In recent years, a system that three-dimensionally recognizes a surrounding environment of a mobile body such as a vehicle by a plurality of sensors mounted on the mobile body has been developed. The mobile body can perform automated movement or automated driving by three-dimensionally recognizing the surrounding environment.

On the other hand, in order to handle pieces of sensing data acquired by the plurality of sensors in an integrated manner, it is important that a positional relationship among the plurality of sensors is to be required with high accuracy.

For example, Patent Document 1 below discloses a stereo camera that calculates a distance to an object on the basis of outputs from a left camera and a right camera arranged so as to have different visual fields. Patent Document 1 discloses use of feature point coordinates of a planar object whose size is known in advance in order to calibrate positional deviations of the left camera and the right camera due to an external factor.

### CITATION LIST

### PATENT DOCUMENT

Patent Document 1: Japanese Patent Application Laid-Open No. 2014-74632

### SUMMARY OF THE INVENTION

### PROBLEMS TO BE SOLVED BY THE INVENTION

As disclosed in Patent Document 1, in order to calibrate the positional relationship among the plurality of sensors including the cameras, specialized knowledge is generally required in addition to a dedicated instrument. Therefore, a user brings a vehicle to a shop or the like and causes an expert to calibrate the positional relationship among the plurality of sensors.

However, frequent bringing of the vehicle to the shop or the like for the calibration of the positional relationship among the plurality of sensors decreases user convenience.

Therefore, it has been required to reduce the influence by the positional deviation of the sensor in a case where the positional deviation has occurred in the sensor.

### SOLUTIONS TO PROBLEMS

According to the present disclosure, there is provided an information processing apparatus including a calculation unit that calculates a positional deviation amount of each of a plurality of sensors of different types, a recognition unit that executes a recognition task by integrating pieces of sensing data acquired by the plurality of sensors, and a processing unit that performs mask processing on a partial region of a recognition result of the recognition task on the basis of the positional deviation amount.

Furthermore, according to the present disclosure, there is provided an information processing method by a computer, including calculating a positional deviation amount of each of a plurality of sensors of different types, executing a recognition task by integrating pieces of sensing data acquired by the plurality of sensors, and performing mask processing on a partial region of a recognition result of the recognition task on the basis of the positional deviation amount.

Moreover, according to the present disclosure, there is provided a program for causing a computer to function as a calculation unit that calculates a positional deviation amount of each of a plurality of sensors of different types, a recognition unit that executes a recognition task by integrating pieces of sensing data acquired by the plurality of sensors, and a processing unit that performs mask processing on a partial region of a recognition result of the recognition task on the basis of the positional deviation amount.

### BRIEF DESCRIPTION OF DRAWINGS

Fig. 1 is an explanatory diagram for explaining a mobile body to which a technology according to the present disclosure is applied.
Fig. 2 is a block diagram illustrating a functional configuration of an information processing apparatus according to a first embodiment.
Fig. 3 is a graph representing an example of a criterion for determining presence or absence of a positional deviation of a sensor.
Fig. 4 is a flowchart illustrating a flow of an operation of the information processing apparatus according to the first embodiment.
Fig. 5 is a block diagram illustrating a functional configuration of an information processing apparatus according to a second embodiment.
Fig. 6 is a flowchart illustrating a flow of an operation of the information processing apparatus according to the second embodiment.
Fig. 7 is a block diagram illustrating a functional configuration of an information processing apparatus according to a third embodiment.
Fig. 8A is a schematic diagram illustrating an example of a criterion for determining presence or absence of a positional deviation of a sensor.
Fig. 8B is a schematic diagram illustrating an example of the criterion for determining the presence or absence of the positional deviation of the sensor.
Fig. 9 is a flowchart illustrating a flow of an operation of the information processing apparatus according to the third embodiment.
Fig. 10 is a block diagram illustrating a functional configuration of an information processing apparatus according to a fourth embodiment.
Fig. 11 is a flowchart illustrating a flow of an operation of the information processing apparatus according to the fourth embodiment.
Fig. 12 is an explanatory diagram for explaining detection of a skeleton posture of a user in a modification of the fourth embodiment.
Fig. 13 is a block diagram illustrating a functional configuration of an information processing apparatus according to a fifth embodiment.
Fig. 14 is a flowchart illustrating a flow of an operation of the information processing apparatus according to the fifth embodiment.
Fig. 15 is a block diagram illustrating a functional configuration of an information processing apparatus according to a sixth embodiment.
Fig. 16 is a flowchart illustrating a flow of an operation of the information processing apparatus according to the sixth embodiment.
Fig. 17 is a block diagram illustrating a functional configuration of an information processing apparatus according to a seventh embodiment.
Fig. 18 is a flowchart illustrating a flow of an operation of the information processing apparatus according to the seventh embodiment.
Fig. 19 is a block diagram illustrating a functional configuration of an information processing apparatus according to an eighth embodiment.
Fig. 20 is a flowchart illustrating a flow of a first operation of the information processing apparatus according to the eighth embodiment.
Fig. 21 is a flowchart illustrating a flow of a second operation of the information processing apparatus according to the eighth embodiment.
Fig. 22 is a flowchart illustrating a flow of a third operation of the information processing apparatus according to the eighth embodiment.
Fig. 23 is a block diagram illustrating a functional configuration of an information processing apparatus according to a ninth embodiment.
Fig. 24 is a graph schematically representing a relationship between a positional deviation amount of a sensor and a threshold of mask processing.
Fig. 25 is a block diagram illustrating a flow of various types of processing by the information processing apparatus according to the ninth embodiment.
Fig. 26 is a flowchart illustrating a flow of an operation of the information processing apparatus according to the ninth embodiment.
Fig. 27 is a block diagram illustrating a functional configuration of an information processing apparatus according to a tenth embodiment.
Fig. 28 is an explanatory diagram illustrating an example of an image notified from an output unit to the user.
Fig. 29 is an explanatory diagram illustrating an example of the image notified from the output unit to the user.
Fig. 30 is a block diagram illustrating a configuration example of a computer that realizes the information processing apparatus according to each embodiment.

### MODE FOR CARRYING OUT THE INVENTION

Hereinafter, preferred embodiments of the present disclosure will be described in detail with reference to the accompanying drawings. Note that, in the present specification and drawings, constituent elements having substantially the same functional configuration are denoted by the same reference signs, and redundant description is omitted.

Note that, the description will be given in the following order.
1. Outline
2. Embodiments
2.1. First Embodiment
2.2. Second Embodiment
2.3. Third Embodiment
2.4. Fourth Embodiment
2.5. Fifth Embodiment
2.6. Sixth Embodiment
2.7. Seventh Embodiment
2.8. Eighth Embodiment
2.9. Ninth Embodiment
3. Hardware Configuration Example

### <1. Outline of System>

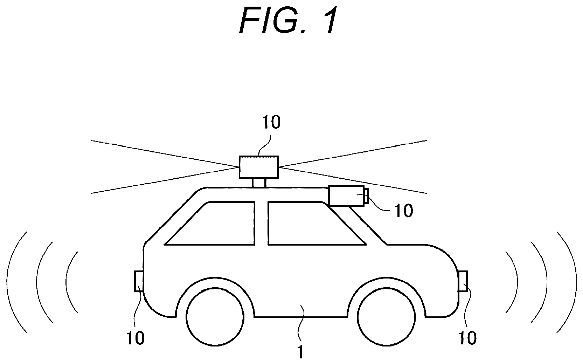

First, an outline of a technology according to the present disclosure will be described with reference to Fig. 1. Fig. 1 is an explanatory diagram for explaining a mobile body 1 to which the technology according to the present disclosure is applied.

As illustrated in Fig. 1, a plurality of sensors 10 of different types is mounted on the mobile body 1. The mobile body 1 is, for example, an automobile. The mobile body 1 can perform automated driving or driving assistance by recognizing a surrounding environment by using pieces of sensing data acquired by the plurality of mounted sensors 10. The sensor 10 mounted on the mobile body 1 may be, for example, light detection and ranging (LiDAR), Radar, an ultrasonic sensor, a camera, or the like.

The mobile body 1 on which the plurality of sensors 10 is mounted can recognize the surrounding environment with higher accuracy by integrating the pieces of sensing data acquired by the plurality of sensors 10. For example, the mobile body 1 can improve the accuracy of recognition and tracking of an object by combining depth information up to the object acquired by the LiDAR and color information of the object acquired by the camera at the same coordinates. In order to integrate the pieces of sensing data acquired by the plurality of sensors 10, it is important to unify a coordinate system of the pieces of sensing data acquired by the plurality of sensors 10 on the basis of relative positions of the plurality of sensors 10.

In general, a relative positional relationship among the plurality of sensors 10 mounted on the mobile body 1 is specified by performing calibration at the time of factory shipment of the mobile body 1. Therefore, the mobile body 1 can unify the coordinate systems of the pieces of sensing data among the plurality of sensors 10 of which the relative positional relationship is specified.

However, in the mobile body 1 after the factory shipment, a position of the sensor 10 may change due to aged deterioration of parts, vibration during traveling, or the like. In such a case, since the relative positions of the plurality of sensors 10 change from the known values, the accuracy of the integration of the pieces of sensing data acquired by the plurality of sensors 10 may decrease.

The technology according to the present disclosure has been conceived in view of the above circumstances. According to the information processing apparatus according to an embodiment of the present disclosure, in a case where the relative positions of the sensors 10 mounted on the mobile body 1 have changed (that is, a positional deviation of the sensor 10 has occurred) from the known values, it is possible to reduce the influence of the positional deviation on the recognition result. Furthermore, according to the information processing apparatus according to another embodiment of the present disclosure, it is possible to detect the occurrence of the positional deviation of the sensor 10 mounted on the mobile body 1, calculate the amount of the positional deviation, and correct the positional deviation. Hereinafter, the information processing apparatus that realizes such a technology according to the present disclosure will be described in more detail.

Note that, in the above description, it has been described that the mobile body 1 is an automobile, but the technology according to the present disclosure is not limited to the above example. The mobile body 1 may be a motorcycle, a bicycle, a personal mobility, an airplane, a drone, a ship, a robot, or the like as long as the mobile body 1 can move on the ground, in the air, or over water.

### <2. Embodiments>

### (2.1. First Embodiment)

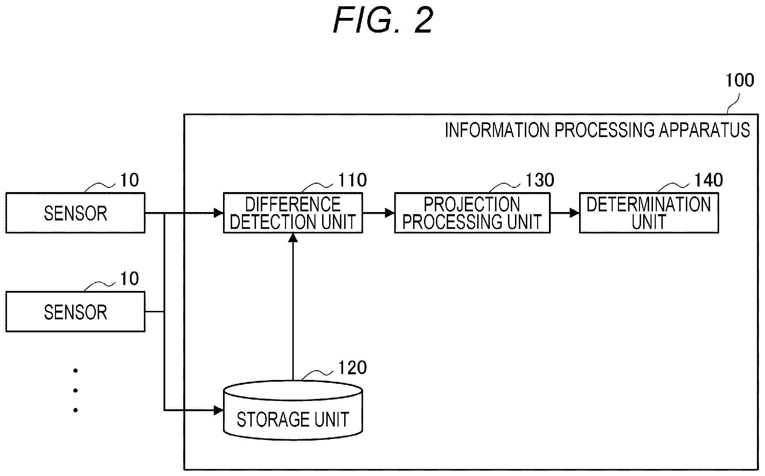

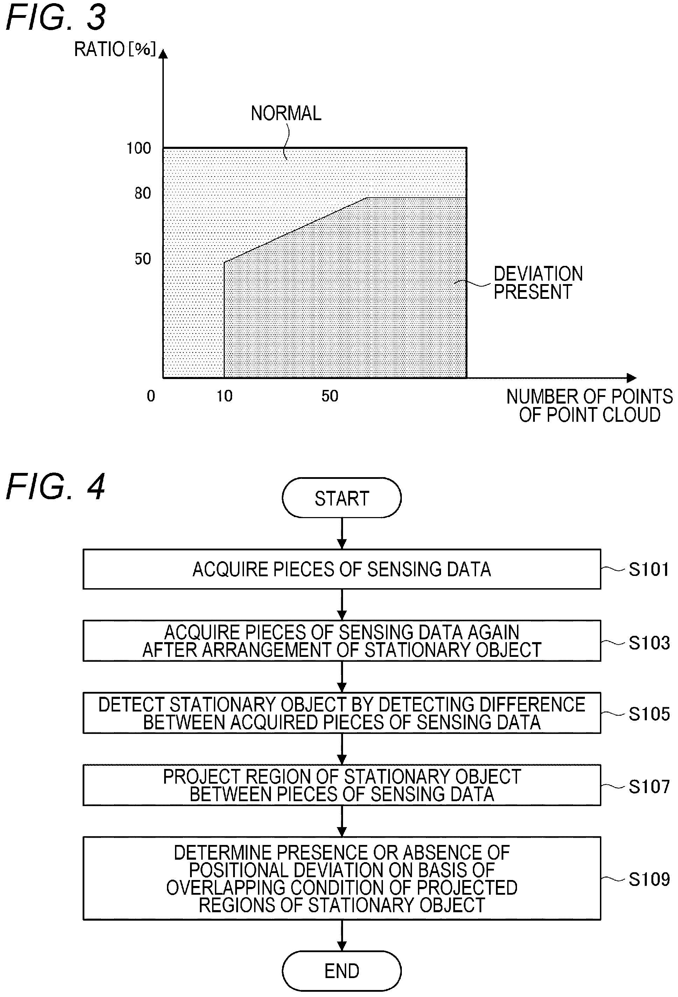

First, a first embodiment of the present disclosure will be described with reference to Figs. 2 to 4. Fig. 2 is a block diagram illustrating a functional configuration of an information processing apparatus 100 according to the first embodiment. Fig. 3 is a graph representing an example of a criterion for determining the presence or absence of the positional deviation of the sensor 10. Fig. 4 is a flowchart illustrating a flow of an operation of the information processing apparatus 100 according to the first embodiment.

As illustrated in Fig. 2, the information processing apparatus 100 according to the first embodiment includes a difference detection unit 110, a storage unit 120, a projection processing unit 130, and a determination unit 140. In the first embodiment, the plurality of sensors 10 may be different types of sensors from each other. The plurality of sensors 10 may include, for example, at least LiDAR and a camera.

The information processing apparatus 100 can determine the presence or absence of the positional deviation among the plurality of sensors 10 with a stationary object arranged in the environment as a reference. Note that, the presence of the positional deviation among the plurality of sensors 10 indicates that the positional relationship among the plurality of sensors 10 deviates from a known positional relationship.

The difference detection unit 110 detects a region of a stationary object as a difference from the pieces of sensing data of the plurality of sensors 10. Specifically, each of the plurality of sensors 10 acquires pieces of sensing data of an environment before the stationary object is arranged and pieces of sensing data of an environment after the stationary object is arranged. Therefore, the difference detection unit 110 can detect the region of the stationary object by detecting a difference between the pieces of sensing data of the environment before the stationary object is arranged and the pieces of sensing data of the environment after the stationary object is arranged.

The stationary object is an object detectable by each of the plurality of sensors 10. The stationary object is arranged in the environment by, for example, a user or the like. The stationary object may be a corner reflector, a chessboard chart, a calibration chart, or the like.

The storage unit 120 is a storage unit that temporarily stores the pieces of sensing data of the environment acquired by the plurality of sensors 10. Specifically, the storage unit 120 temporarily stores the pieces of sensing data of the environment before the stationary object is arranged, which are acquired by the plurality of sensors 10.

The projection processing unit 130 projects the region of the stationary object in the sensing data acquired by a certain sensor 10 onto the sensing data acquired by another sensor 10. Specifically, the projection processing unit 130 projects the region of the stationary object in the sensing data of a certain sensor 10 onto a corresponding region of the sensing data of another sensor 10 on the basis of the known positional relationship between the sensors 10. For example, the projection processing unit 130 may project an image generated from a point cloud corresponding to a stationary object in point cloud data acquired by the LiDAR (certain sensor 10) onto a corresponding region in the image imaged by the camera (another sensor 10).

The determination unit 140 determines the presence or absence of the positional deviation of each of the plurality of sensors 10 by comparing the regions of the stationary object in the pieces of sensing data acquired by the plurality of sensors 10. Specifically, the determination unit 140 may determine the presence or absence of the positional deviation of each of the plurality of sensors 10 on the basis of a degree of overlapping between the region of the stationary object projected on the sensing data of another sensor 10 by the projection processing unit 130 and the region of the stationary object of the sensing data of another sensor 10.

For example, the determination unit 140 may determine the presence or absence of the positional deviation between the sensors 10 on the basis of an overlapping ratio between the region of the stationary object in the image imaged by the camera and the region of the stationary object in the point cloud data acquired by the LiDAR.

Fig. 3 is a graph in which the number of points of a point cloud included in a region of a stationary object in the point cloud data acquired by the LiDAR is plotted on a horizontal axis and the overlapping ratio between the region of the stationary object in the image imaged by the camera and the region of the stationary object in the point cloud data acquired by the LiDAR is plotted on a vertical axis. As illustrated in Fig. 3, in a case where the overlapping ratio between the regions of the stationary object is high, the determination unit 140 may determine that the plurality of sensors 10 does not deviate from the known positional relationship (are in a normal state). Furthermore, in a case where the overlapping ratio between the regions of the stationary object is low, the determination unit 140 may determine that the plurality of sensors 10 deviates from the known positional relationship (state where there is a deviation).

However, in a case where the number of points in the point cloud included in the region of the stationary object is low, the reliability of a region boundary of the stationary object in the point cloud data acquired by the LiDAR may be low. Therefore, the determination unit 140 may lower a threshold of a degree of overlapping determined to be a normal state as the number of points of the point cloud included in the region of the stationary object in the point cloud data decreases. Accordingly, in a case where the reliability of the region boundary of the stationary object in the point cloud data is low, the determination unit 140 can suppress a possibility of erroneously determining that the positional deviation occurs in the sensor 10. Moreover, in a case where the number of points of the point cloud included in the region of the stationary object is extremely small, the determination unit 140 may determine that it is difficult to determine the positional deviation and determine that the state is the normal state regardless of the overlapping ratio between the regions of the stationary object.

Next, the flow of the operation of the information processing apparatus 100 according to the first embodiment will be described with reference to Fig. 4.

As illustrated in Fig. 4, first, the plurality of sensors 10 acquires pieces of sensing data of an environment in which no stationary object is disposed (S101). Next, after the stationary object is arranged in the environment by the user or the like, the plurality of sensors 10 again acquires pieces of sensing data of the environment in which the stationary object is arranged (S103).

Subsequently, in each of the plurality of sensors 10, the difference detection unit 110 detects the region of the stationary object by detecting the difference between the pieces of sensing data of the environment before the stationary object is arranged and the pieces of sensing data of the environment after the stationary object is arranged (S105). Next, the projection processing unit 130 projects the region of the stationary object between the pieces of sensing data on the basis of the known positional relationship between the sensors 10 (S107). Thereafter, the determination unit 140 determines the presence or absence of the positional deviation of each of the plurality of sensors 10 on the basis of the overlapping ratio between the projected region of the stationary object and a region of the stationary object in sensing data at a projection destination (S109).

According to the above configuration, the information processing apparatus 100 according to the first embodiment can determine the presence or absence of the positional deviation among the plurality of sensors 10 by comparing the regions of the stationary object sensed by the plurality of sensors 10 with each other.

### (2.2. Second Embodiment)

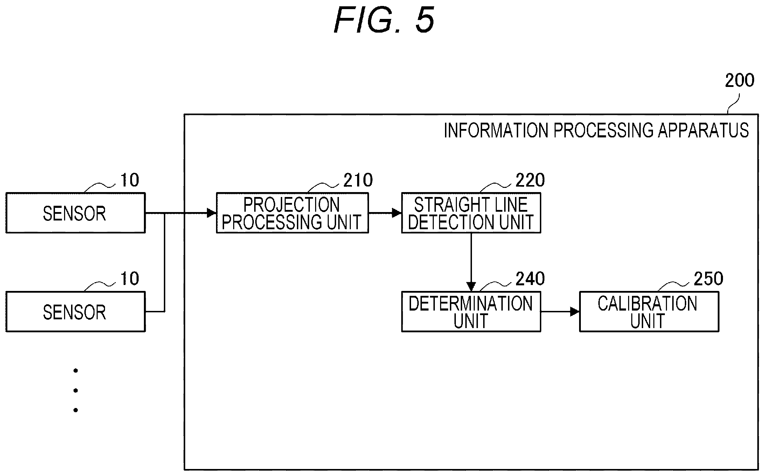

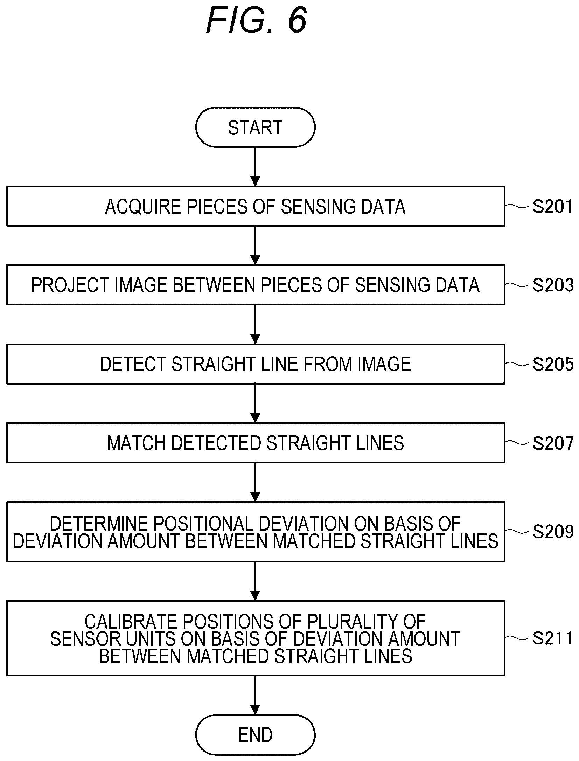

Next, a second embodiment of the present disclosure will be described with reference to Figs. 5 and 6. Fig. 5 is a block diagram illustrating a functional configuration of an information processing apparatus 200 according to the second embodiment. Fig. 6 is a flowchart illustrating a flow of an operation of the information processing apparatus 200 according to the second embodiment.

As illustrated in Fig. 5, the information processing apparatus 200 according to the second embodiment includes a projection processing unit 210, a straight line detection unit 220, a determination unit 240, and a calibration unit 250. In the second embodiment, the plurality of sensors 10 may be different types of sensors from each other. The plurality of sensors 10 may include, for example, a LiDAR and a camera.

The information processing apparatus 200 determines the presence or absence of the positional deviation among the plurality of sensors 10 by detecting straight lines from the pieces of sensing data acquired by the plurality of sensors 10 and matching the detected straight lines with each other. Note that, the presence of the positional deviation among the plurality of sensors 10 indicates that the positional relationship among the plurality of sensors 10 deviates from the known positional relationship.

The projection processing unit 210 projects the sensing data acquired by a certain sensor 10 onto the sensing data acquired by another sensor 10. Specifically, on the basis of the known positional relationship between the sensors 10, the projection processing unit 210 projects an image generated from the sensing data of a certain sensor 10 such that an angle of view corresponds to an image generated from the sensing data of another sensor 10. For example, the projection processing unit 210 may project an image generated from the point cloud data acquired by the LiDAR (certain sensor 10) onto an image imaged by the camera (another sensor 10) so as to correspond to the angle of view.

The straight line detection unit 220 detects the straight lines from the images generated from the pieces of sensing data acquired by the plurality of sensors 10. For example, the straight line detection unit 220 may detect the straight lines from the images by using Hough transform, line segment detector (LSD), or a known straight line detection algorithm.

The determination unit 240 determines the presence or absence of the positional deviation of each of the plurality of sensors 10 by matching the straight lines in the images generated from the pieces of sensing data acquired by the plurality of sensors 10 and comparing the matched straight lines. Specifically, the determination unit 240 first matches the straight line in the image generated from the sensing data of another sensor 10 with the straight line in the image generated from the sensing data of a certain sensor 10 and projected such that the angle of view corresponds to the sensing data of another sensor 10. Next, the determination unit 240 determines the presence or absence of the positional deviation of each of the plurality of sensors 10 on the basis of a deviation amount between the matched straight lines.

For example, the determination unit 240 may match the straight line in the image imaged by the camera with the straight line in the image corresponding to the camera image generated from the point cloud data acquired by the LiDAR. Accordingly, the determination unit 240 can determine the presence or absence of the positional deviation of each of the plurality of sensors 10 on the basis of the deviation amount between the matched straight lines.

The calibration unit 250 calibrates the positional relationship among the plurality of sensors 10 on the basis of the deviation amount between the straight lines matched by the determination unit 240. Specifically, the calibration unit 250 calculates a deviation amount of each of the matched combinations of the straight lines, and calculates a correction amount of the positional deviation such that the sum of the calculated deviation amounts is minimized. The calibration unit 250 can calibrate the positional relationship among the plurality of sensors 10 by correcting the known positional relationship among the plurality of sensors 10 with the calculated correction amount of the positional deviation.

Next, the flow of the operation of the information processing apparatus 200 according to the second embodiment will be described with reference to Fig. 6.

As illustrated in Fig. 6, the plurality of sensors 10 first acquires the pieces of sensing data (S201). Next, the projection processing unit 210 projects an image between the sensing data on the basis of the known positional relationship between the sensors 10 (S203). Specifically, on the basis of the known positional relationship between the sensors 10, the projection processing unit 210 projects the image generated from one of the pieces of sensing data such that the angle of view corresponds to an image generated from the other of the pieces of sensing data.

Subsequently, the straight line detection unit 220 detects the straight lines from the images generated from the pieces of sensing data (S205). Moreover, the determination unit 240 determines the presence or absence of the positional deviation of each of the plurality of sensors 10 by matching the straight lines between the images generated from the pieces of sensing data (S207) and calculating the deviation amount between the matched straight lines (S209). Subsequently, the calibration unit 250 calibrates the positional relationship among the plurality of sensors 10 on the basis of the deviation amount between the matched straight lines (S211).

According to the above configuration, the information processing apparatus 200 according to the second embodiment can determine the presence or absence of the positional deviation among the plurality of sensors 10 by matching the straight lines in the images generated from the pieces of sensing data of the plurality of sensors 10. Furthermore, the information processing apparatus 200 can calibrate the positional relationship among the plurality of sensors 10 by calculating the deviation amount between the matched straight lines.

### (2.3. Third Embodiment)

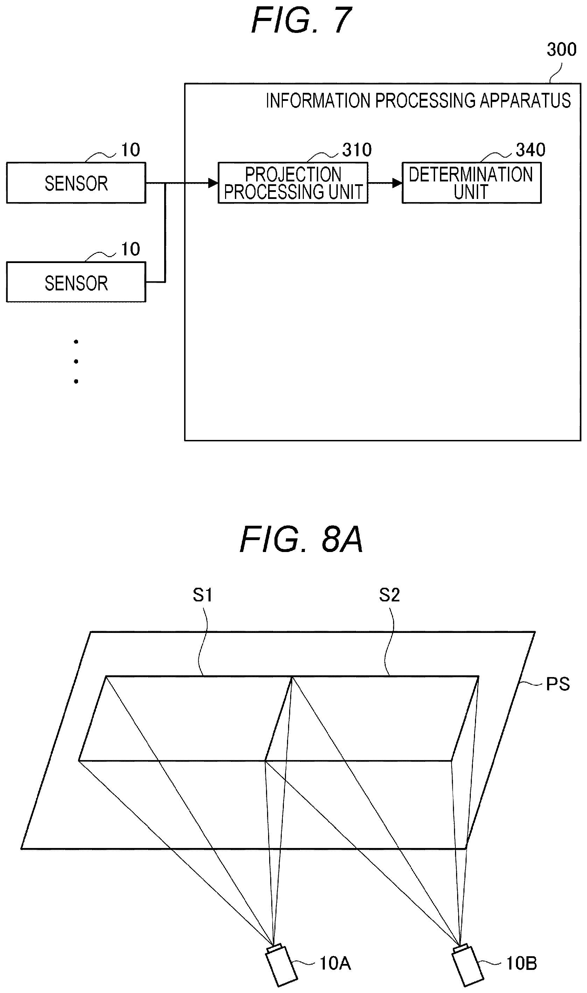

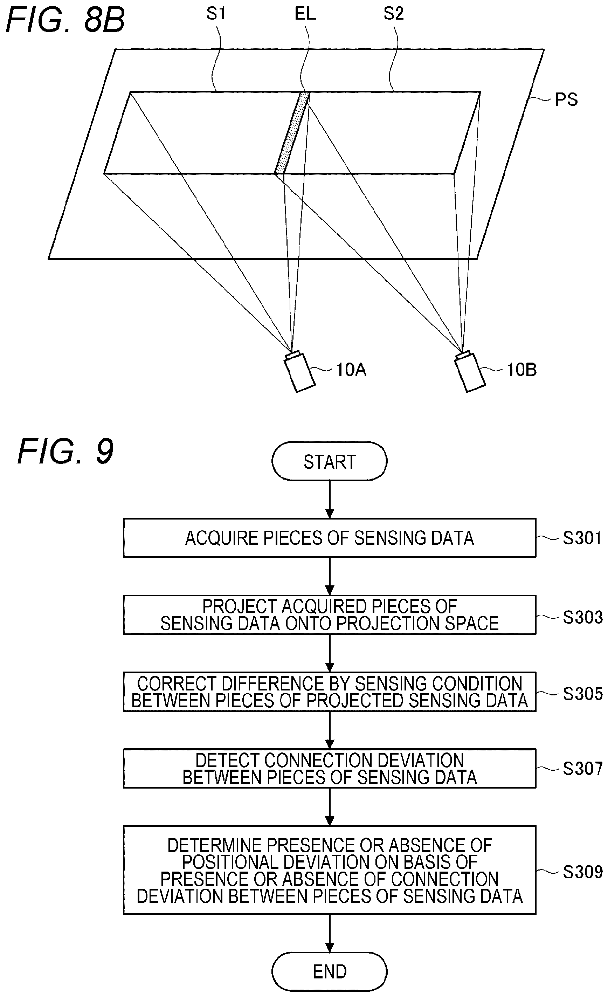

Next, a third embodiment of the present disclosure will be described with reference to Figs. 7 to 9. Fig. 7 is a block diagram illustrating a functional configuration of an information processing apparatus 300 according to the third embodiment. Figs. 8A and 8B are schematic diagrams illustrating an example of a criterion for determining the presence or absence of the positional deviation of the sensor 10. Fig. 9 is a flowchart illustrating a flow of an operation of the information processing apparatus 300 according to the third embodiment.

As illustrated in Fig. 7, the information processing apparatus 300 according to the third embodiment includes a projection processing unit 310 and a determination unit 340. In the third embodiment, the plurality of sensors 10 may be, for example, a plurality of cameras.

The information processing apparatus 300 projects the pieces of sensing data acquired by the plurality of sensors 10 so as to be seamlessly connected to a projection space, and can determine the presence or absence of the positional deviation among the plurality of sensors 10 on the basis of a connection deviation between the pieces of projected sensing data. Note that, the presence of the positional deviation among the plurality of sensors 10 indicates that the positional relationship among the plurality of sensors 10 deviates from the known positional relationship.

The projection processing unit 310 virtually projects the pieces of sensing data acquired by the plurality of sensors 10 onto the projection space. Specifically, the projection processing unit 310 generates an image in which the pieces of sensing data are connected to each other by virtually projecting the pieces of sensing data such as the images acquired by the plurality of sensors 10 onto the projection space. For example, the projection processing unit 310 may generate an omnidirectional image overlooking the periphery of 360° of the mobile body 1 from above by virtually projecting images imaged by the four sensors 10 attached to the front, rear, left, and right of the mobile body 1 onto the projection space.

The determination unit 340 determines the presence or absence of the positional deviation of each of the plurality of sensors 10 by detecting the connection deviation between the pieces of sensing data projected onto the projection space.

Here, the determination criterion of the determination unit 340 will be described by exemplifying a case where an image S1 sensed by a first sensor 10A and an image S2 sensed by a second sensor 10B are projected onto a projection space PS as illustrated in Figs. 8A and 8B.

For example, in a case where a positional relationship between the first sensor 10A and the second sensor 10B remains the known positional relationship, the image S1 and the image S2 are seamlessly connected to each other in the projection space PS as illustrated in Fig. 8A. However, in a case where the positional relationship between the first sensor 10A and the second sensor 10B deviates from the known positional relationship, as illustrated in Fig. 8B, the image S1 and the image S2 are not seamlessly connected to the projection space PS, and a linear connection deviation region EL occurs between the image S1 and the image S2. The connection deviation region EL is, for example, a region where the image S1 and the image S2 overlap each other or a gap region where the image S1 and the image S2 are separated without being connected, and is caused by a deviation in relative positions of the first sensor 10A and the second sensor 10B.

The determination unit 340 can determine the presence or absence of the positional deviation of each of the plurality of sensors 10 by detecting the connection deviation region EL when the pieces of sensing data acquired by the plurality of sensors 10 are projected onto the projection space. That is, in a case where the connection deviation region EL is detected, the determination unit 340 can determine that the positional deviation has occurred among the plurality of sensors 10. On the other hand, in a case where the connection deviation region EL is not detected, the determination unit 340 can determine that there is no positional deviation among the plurality of sensors 10.

Next, the flow of the operation of the information processing apparatus 300 according to the third embodiment will be described with reference to Fig. 9.

As illustrated in Fig. 9, the plurality of sensors 10 first acquires the pieces of sensing data (S301). Next, the projection processing unit 310 projects the pieces of acquired sensing data onto the projection space (S303). Subsequently, the projection processing unit 310 corrects a difference due to a sensing condition between the pieces of projected sensing data (S305). For example, in a case where the pieces of sensing data are images, the projection processing unit 310 corrects differences in brightness, color tone, and the like between the images by adjusting white balance, contrast, and the like of the images.

Thereafter, the determination unit 340 detects the linear connection deviation region EL that can occur between the pieces of sensing data projected onto the projection space (S307). Therefore, the determination unit 340 can determine the presence or absence of the positional deviation of each of the plurality of sensors 10 on the basis of the presence or absence of the connection deviation region EL between the pieces of sensing data (S309).

According to the above configuration, the information processing apparatus 300 according to the third embodiment can determine the presence or absence of the positional deviation among the plurality of sensors 10 on the basis of whether or not the connection deviation occurs when the sensing data of each of the plurality of sensors 10 is connected.

### (2.4. Fourth Embodiment)

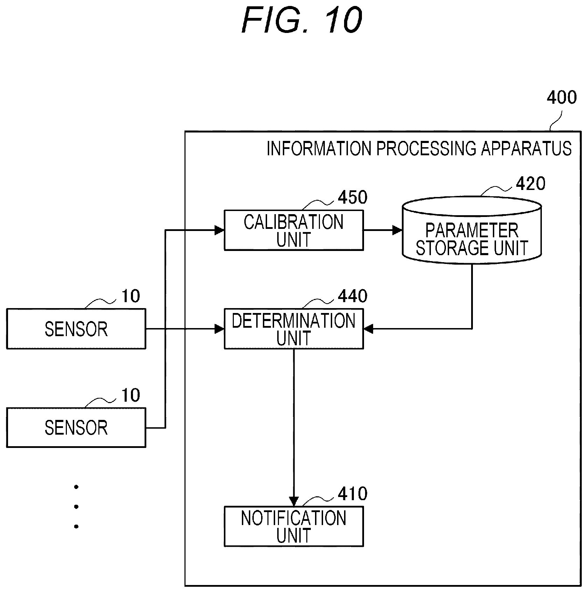

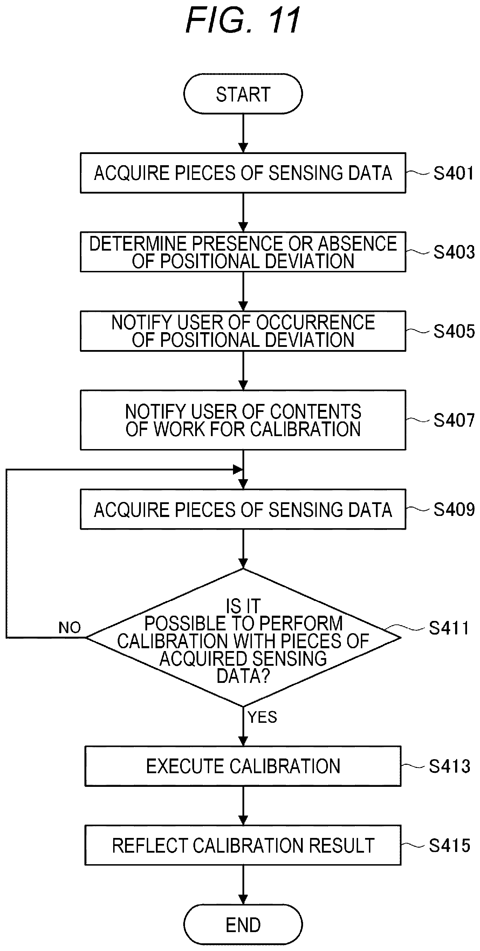

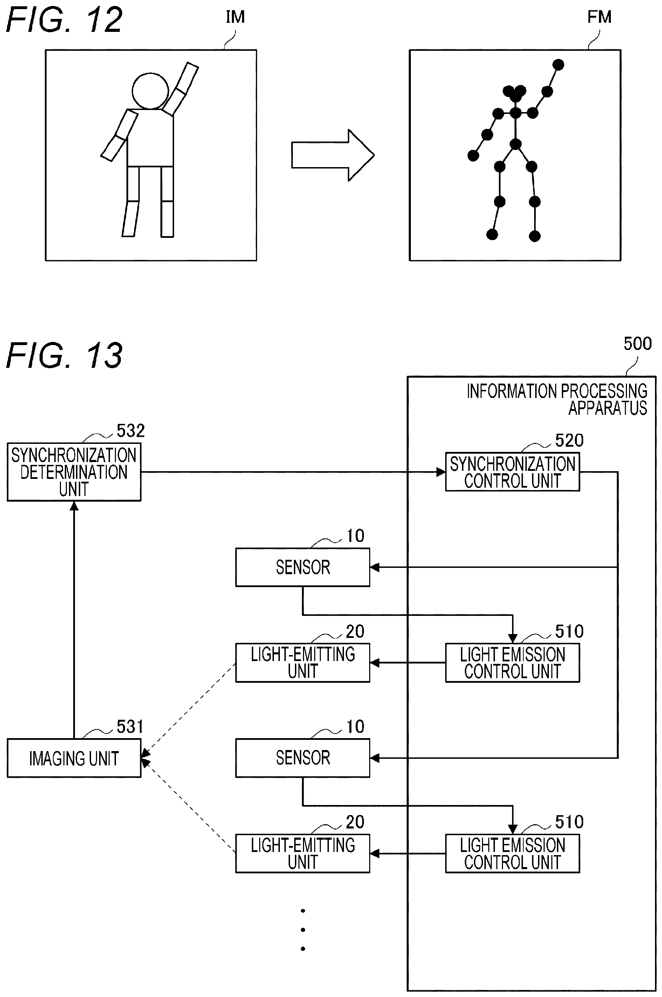

Next, a fourth embodiment of the present disclosure will be described with reference to Figs. 10 to 12. Fig. 10 is a block diagram illustrating a functional configuration of an information processing apparatus 400 according to the fourth embodiment. Fig. 11 is a flowchart illustrating a flow of an operation of the information processing apparatus 400 according to the fourth embodiment. Fig. 12 is an explanatory diagram for explaining detection of a skeleton posture of a user in a modification of the fourth embodiment.

As illustrated in Fig. 10, the information processing apparatus 400 according to the fourth embodiment includes a determination unit 440, a parameter storage unit 420, a notification unit 410, and a calibration unit 450. In the fourth embodiment, the plurality of sensors 10 may be, for example, any of LiDAR, Radar, an ultrasonic sensor, or a camera.

In a case where the positional deviation has occurred in the sensor 10, the information processing apparatus 400 notifies the user of a work for calibrating the positional relationship among the plurality of sensors 10. Therefore, the information processing apparatus 400 can calibrate the positional relationship among the plurality of sensors 10 by using pieces of sensing data obtained by the work executed by the user according to the notification of the information processing apparatus 400. Note that, the presence of the positional deviation among the plurality of sensors 10 indicates that the positional relationship among the plurality of sensors 10 deviates from the known positional relationship.

The determination unit 440 determines the presence or absence of the positional deviation of each of the plurality of sensors 10. For example, the determination unit 440 may determine the presence or absence of the positional deviation of each of the plurality of sensors 10 by using the method described in another embodiment or a known method.

The parameter storage unit 420 stores various parameters including external parameters indicating the known positional relationship among the plurality of sensors 10. For example, the parameter storage unit 420 may store internal parameters of cameras included in the plurality of sensors 10 and external parameters indicating the known positional relationship among the plurality of sensors 10. The determination unit 440 can determine whether or not the positional deviation occurs in each of the plurality of sensors 10 by referring to the external parameter stored in the parameter storage unit 420.

The notification unit 410 notifies the user by using an image, text, voice, or a combination thereof. Specifically, in a case where the determination unit 440 determines that the positional deviation occurs in the sensor 10, the notification unit 410 may first notify the user that the positional deviation occurs in the sensor 10. Furthermore, the notification unit 410 may notify the user of contents of the work for calibrating the positional relationship among the plurality of sensors 10. For example, as the work for calibrating the positional relationship among the plurality of sensors 10, the notification unit 410 may notify the user that the calibration chart is presented at a predetermined position and that the calibration chart is moved on a predetermined trajectory. Note that, the notification unit 410 may directly notify the user of the above contents, or may notify the user of the above contents via a terminal device (such as a smartphone) possessed by the user.

The calibration unit 450 calibrates the positional relationship among the plurality of sensors 10 by using the pieces of sensing data acquired by the plurality of sensors 10. Specifically, the calibration unit 450 calibrates the positional relationship among the plurality of sensors 10 by using sensing data obtained by sensing the content of the work performed by the user in accordance with the notification by the notification unit 410. For example, the calibration unit 450 may calibrate the positional relationship among the plurality of sensors 10 by using coordinates in the pieces of sensing data of the calibration chart presented at the predetermined position by the user and moved on the predetermined trajectory. Note that, the positional relationship among the plurality of sensors 10 calibrated by the calibration unit 450 is stored in the parameter storage unit 420, as the external parameter indicating the positional relationship among the plurality of sensors 10.

Furthermore, the calibration unit 450 may determine whether or not sensing data usable for calibration has been acquired after the notification unit 410 notifies the user of the work for calibration. In a case where the sensing data usable for calibration cannot be acquired, the calibration unit 450 may cause the notification unit 410 to notify the work for calibrating the positional relationship among the plurality of sensors 10 again. Note that, sensing data unusable for calibration is, for example, data in which the calibration chart is not recognizable, data in which there is no calibration chart at a predetermined position or a predetermined trajectory, or the like.

Next, the flow of the operation of the information processing apparatus 400 according to the fourth embodiment will be described with reference to Fig. 11.

As illustrated in Fig. 11, the plurality of sensors 10 acquires the pieces of sensing data (S401). Next, the determination unit 440 determines the presence or absence of the positional deviation of each of the plurality of sensors 10 (S403). Subsequently, in a case where it is determined that the positional deviation occurs in the sensor 10, the notification unit 410 notifies the user of the occurrence of the positional deviation of the sensor 10 (S405), and further notifies the user of the contents of the work for calibrating the positional relationship among the plurality of sensors 10 (S407). Next, after the user performs the work for calibrating the positional relationship among the plurality of sensors 10, the plurality of sensors 10 again acquires the pieces of sensing data (S409).

Here, the calibration unit 450 determines whether or not the pieces of sensing data acquired by the plurality of sensors 10 are usable for calibration of the positional relationship among the plurality of sensors 10 (S411). In a case where the plurality of sensors 10 is not usable for calibration (S411/NO), the plurality of sensors 10 reacquires the pieces of sensing data again (S409). On the other hand, in a case where the plurality of sensors 10 is usable for calibration (S411/YES), calibration unit 450 executes calibration of the positional relationship among the plurality of sensors 10 (S413). Thereafter, the positional relationship among the plurality of sensors 10 derived by the calibration by the calibration unit 450 is stored in the parameter storage unit 420. Therefore, a calibration result by the calibration unit 450 is reflected in arithmetic processing such as environment recognition (S415).

According to the above configuration, in a case where the positional deviation has occurred in the sensor 10, the information processing apparatus 400 according to the fourth embodiment can notify the user of the occurrence of the positional deviation of the sensor 10 and the work for calibrating the positional relationship among the sensors 10. Furthermore, the information processing apparatus 400 can calibrate the positional relationship among the plurality of sensors 10 by sensing the calibration chart presented by the user with the plurality of sensors 10.

### (Modification)

Hereinafter, the modification of the fourth embodiment will be described. The contents of the work for calibration notified from the notification unit 410 to the user are not limited to presenting the above-described calibration chart at the predetermined position and moving the calibration chart on the predetermined trajectory.

For example, the contents of the work for calibration may be causing the user to take a plurality of predetermined poses. Accordingly, the calibration unit 450 can calibrate the positional relationship among the plurality of sensors 10 by using position coordinates of joint points extracted from the poses of the user included in the pieces of sensing data.

Specifically, as illustrated in Fig. 12, first, sensing data IM of the user who takes a predetermined pose by the plurality of sensors 10 is acquired. The calibration unit 450 can generate skeleton posture data FM of the user by extracting the joint points (or a feature point such as an eye) of the user from the sensing data IM of the user who takes the predetermined pose. Three-dimensional coordinates of the joint points of the generated skeleton posture data FM are the same among the plurality of sensors 10 having sensed the poses of the same user. Therefore, the calibration unit 450 can calibrate the positional relationship among the plurality of sensors 10 by matching the three-dimensional coordinates of the joint points of the skeleton posture data FM among the plurality of sensors 10. Moreover, the calibration unit 450 can calibrate the positional relationship among the plurality of sensors 10 with higher accuracy by performing the above processing for the plurality of poses of the user.

### (2.5. Fifth Embodiment)

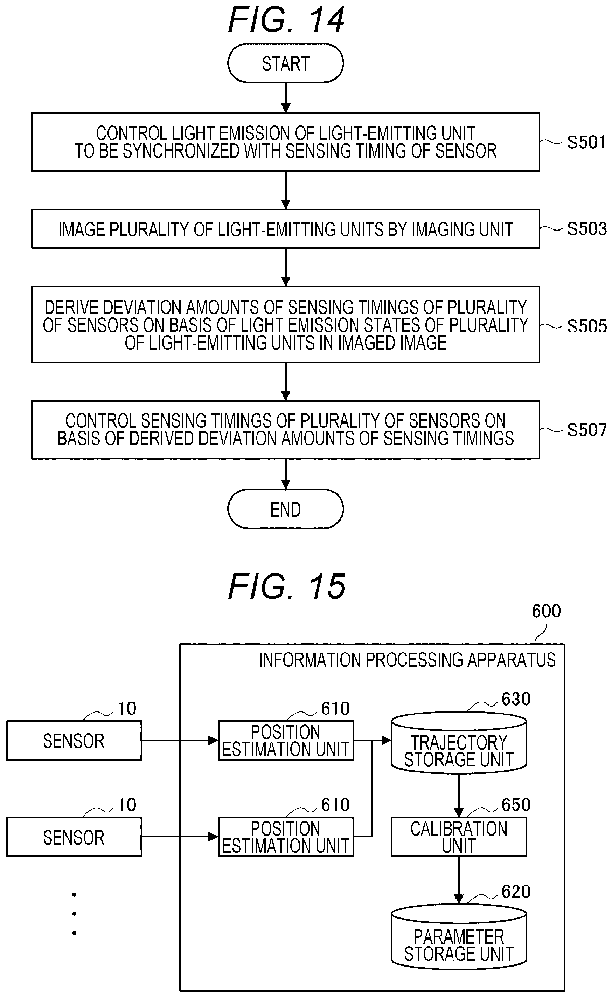

Next, a fifth embodiment of the present disclosure will be described with reference to Figs. 13 and 14. Fig. 13 is a block diagram illustrating a functional configuration of an information processing apparatus 500 according to the fifth embodiment. Fig. 14 is a flowchart illustrating a flow of an operation of the information processing apparatus 500 according to the fifth embodiment.

As illustrated in Fig. 13, an information processing apparatus 500 according to the fifth embodiment includes a synchronization control unit 520 and a light emission control unit 510 provided for every sensor 10. In the fifth embodiment, the plurality of sensors 10 may be, for example, any of LiDAR, Radar, an ultrasonic sensor, or a camera. A light-emitting unit 20 may be, for example, a lamp, an array, or a display including a light-emitting diode (LED) capable of blinking at a high speed cycle.

The information processing apparatus 500 can synchronize sensing timings of the plurality of sensors 10 by imaging light emission states of a plurality of light-emitting units 20 that emits light rays in synchronization with the sensing timings of the plurality of sensors 10 by using an imaging unit 531.

The light emission control unit 510 controls a light emission timing of the light-emitting unit 20 so as to be synchronized with the sensing timing of the sensor 10. For example, the light emission control unit 510 may cause the light-emitting unit 20 to emit light at the same timing as the sensing timings of the sensor 10. Accordingly, the synchronization determination unit 532 can determine whether or not the sensing timings of the plurality of sensors 10 are synchronized by determining whether or not the light emission timings of the plurality of light-emitting units 20 coincide with each other by imaging the light emission states of the plurality of light-emitting units 20 by the imaging unit 531.

Furthermore, the light emission control unit 510 may change a light emission pattern of the light-emitting unit 20 for every light emission timing. Accordingly, the synchronization determination unit 532 can determine how much the sensing timings of the plurality of sensors 10 deviate from each other by comparing the light emission patterns of the plurality of light-emitting units 20 imaged by the imaging unit 531.

For example, in a case where each of the plurality of sensors 10 is a camera, the light emission control unit 510 may cause the light-emitting unit 20 to emit the light in synchronization with an imaging frame of the camera. At this time, the light emission control unit 510 may control the light emission pattern or light emission color of the light-emitting unit 20 such that a frame number of the synchronized imaging frame can be grasped. For example, the light emission control unit 510 may control an LED array or an LED display constituting the light-emitting unit 20 such that the light emission pattern becomes the frame number of the synchronized imaging frame. Furthermore, the light emission control unit 510 may control an LED lamp constituting the light-emitting unit 20 such that the light emission color becomes a color associated with the frame number of the imaging frame in advance.

The synchronization control unit 520 controls the sensing timings of the plurality of sensors 10 on the basis of the determination of the synchronization determination unit 532. For example, in a case where the synchronization determination unit 532 derives deviation amounts of the sensing timings of the plurality of sensors 10, the synchronization control unit 520 may control the sensing timings of the plurality of sensors 10 on the basis of the derived deviation amounts of the sensing timings. Furthermore, in a case where the synchronization determination unit 532 determines only a deviation between the sensing timings of the plurality of sensors 10, the synchronization control unit 520 may finely vary the sensing timings of the plurality of sensors 10.

Next, the flow of the operation of the information processing apparatus 500 according to the fifth embodiment will be described with reference to Fig. 14.

As illustrated in Fig. 14, first, each of the light emission control units 510 controls light emission of the light-emitting unit 20 so as to be synchronized with the sensing timing of the corresponding sensor 10 (S501). Next, the imaging unit 531 simultaneously images the light emission states of the plurality of light-emitting units 20 (S503). Subsequently, the synchronization determination unit 532 derives the deviation amounts of the sensing timings of the plurality of sensors 10 on the basis of the light emission states of the plurality of light-emitting units 20 in the imaged image (S505). Thereafter, the synchronization control unit 520 controls the sensing timings of the plurality of sensors 10 on the basis of the derived deviation amounts of the sensing timings of the plurality of sensors 10 (S507).

According to the above configuration, the information processing apparatus 500 according to the fifth embodiment can synchronize the sensing timings of the plurality of sensors 10 by simultaneously imaging the plurality of light-emitting units 20 that emit the light rays in synchronization with the plurality of sensors 10 by the imaging unit 531.

### (2.6. Sixth Embodiment)

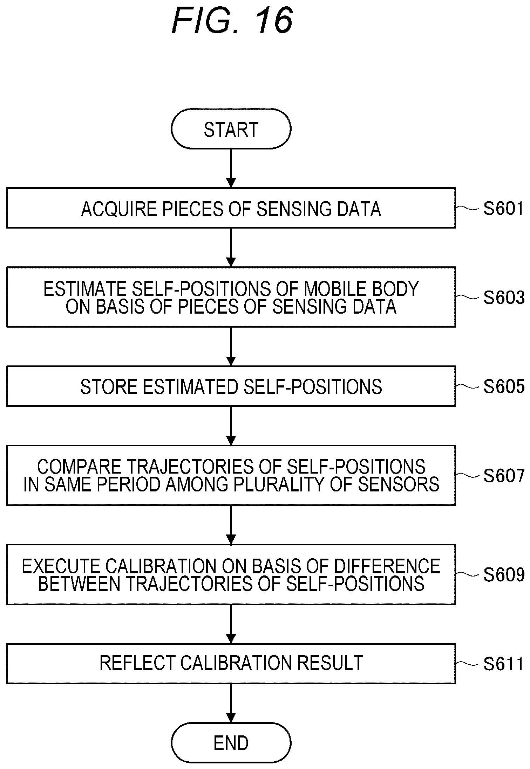

Next, a sixth embodiment of the present disclosure will be described with reference to Figs. 15 and 16. Fig. 15 is a block diagram illustrating a functional configuration of an information processing apparatus 600 according to the sixth embodiment. Fig. 16 is a flowchart illustrating a flow of an operation of the information processing apparatus 600 according to the sixth embodiment.

As illustrated in Fig. 15, the information processing apparatus 600 according to the sixth embodiment includes position estimation units 610 provided for every sensor of the plurality of sensors 10, a trajectory storage unit 630, a calibration unit 650, and a parameter storage unit 620. The plurality of sensors 10 may be, for example, a position sensor that acquires information regarding a position of the mobile body 1, such as a global navigation satellite system (GNSS) sensor or an inertial measurement unit (IMU), or may be a sensor that acquires information regarding the environment, such as LiDAR, Radar, an ultrasonic sensor, or a camera.

The information processing apparatus 600 can calibrate the positional relationship among the plurality of sensors 10 by comparing traveling trajectories of the mobile body 1 estimated from the pieces of sensing data acquired by the plurality of sensors 10 with each other.

The position estimation unit 610 estimates a self-position of the mobile body 1 by using the sensing data acquired by the sensor 10. For example, in a case where the sensor 10 is the GNSS sensor, the position estimation unit 610 can estimate the self-position of the mobile body 1 on the basis of positional information acquired by the GNSS sensor. Furthermore, in a case where the sensor 10 is the IMU, the position estimation unit 610 can estimate the self-position of the mobile body 1 by detecting the movement of the mobile body 1 on the basis of information regarding three-dimensional inertial motion (acceleration and angular velocity of three orthogonal axes) acquired by the IMU. Furthermore, in a case where the sensor 10 is the camera, the position estimation unit 610 can estimate the self-position of the mobile body 1 from an image imaged by the camera by using Visual Simultaneous Localization and Mapping (Visual-SLAM). Moreover, in a case where the sensor 10 is the LiDAR, Radar, or ultrasonic sensor, the position estimation unit 610 can estimate the self-position of the mobile body 1 from depth information acquired by the sensor 10.

The trajectory storage unit 630 stores the traveling trajectory of the mobile body 1 by storing the self-position of the mobile body 1 estimated from the pieces of sensing data acquired by the plurality of sensors 10 in time series. For example, the trajectory storage unit 630 may store a latest travel trajectory of the mobile body 1 by storing a latest estimated self-position of the mobile body 1 for every sensor 10 in time series.

The calibration unit 650 calibrates the positional relationship among the plurality of sensors 10 by comparing the traveling trajectories of the mobile body 1 estimated from the pieces of sensing data acquired by the plurality of sensors 10. Specifically, the calibration unit 650 calibrates the positional relationship among the plurality of sensors 10 by comparing the traveling trajectories of the mobile body 1 stored in the trajectory storage unit 630 for every sensor 10. For example, it is considered that the traveling trajectories of the mobile body 1 in the same period substantially coincide with each other regardless of the sensor 10 used for estimation. Therefore, the calibration unit 650 can estimate the positional deviation amount among the plurality of sensors 10 on the basis of the deviation of the traveling trajectories of the mobile body 1 estimated for every sensor 10. Note that, the positional relationship among the plurality of sensors 10 calibrated by the calibration unit 650 is stored in the parameter storage unit 620, as the external parameter indicating the positional relationship among the plurality of sensors 10.

The parameter storage unit 620 stores various parameters of the plurality of sensors 10. For example, the parameter storage unit 620 may store, as the external parameter, the positional relationship among the plurality of sensors 10 calibrated by the calibration unit 650.

Next, the flow of the operation of the information processing apparatus 600 according to the sixth embodiment will be described with reference to Fig. 16.

As illustrated in Fig. 16, the plurality of sensors 10 acquires the pieces of sensing data (S601). Next, the position estimation unit 610 estimates the self-position of the mobile body 1 for every sensor 10 on the basis of the pieces of sensing data acquired by the plurality of sensors 10 (S603). Subsequently, the self-position of the mobile body 1 estimated for every sensor 10 is stored in the trajectory storage unit 630 (S605).

Here, in a case where a determination unit (not illustrated) determines the occurrence of the positional deviation among the plurality of sensors 10, or the like, the calibration unit 650 calibrates the positional relationship among the plurality of sensors 10. Specifically, the calibration unit 650 reads the estimated self-position of the mobile body 1 in the same period from the trajectory storage unit 630, and compares the traveling trajectories of the mobile body 1 among the plurality of sensors 10 (S607). Therefore, the calibration unit 650 can execute the calibration of the positional relationship among the plurality of sensors 10 on the basis of the difference between the traveling trajectories of the mobile body 1 estimated for every sensor 10 (S609). Thereafter, the positional relationship among the plurality of sensors 10 derived by the calibration by the calibration unit 650 is stored in the parameter storage unit 620. Therefore, a calibration result by the calibration unit 650 is reflected in the arithmetic processing such as environment recognition (S611).

According to the above configuration, the information processing apparatus 600 according to the sixth embodiment can calibrate the positional relationship among the plurality of sensors 10 by using the self-position and the traveling trajectories of the mobile body 1 estimated for every sensor 10.

### (2.7. Seventh Embodiment)

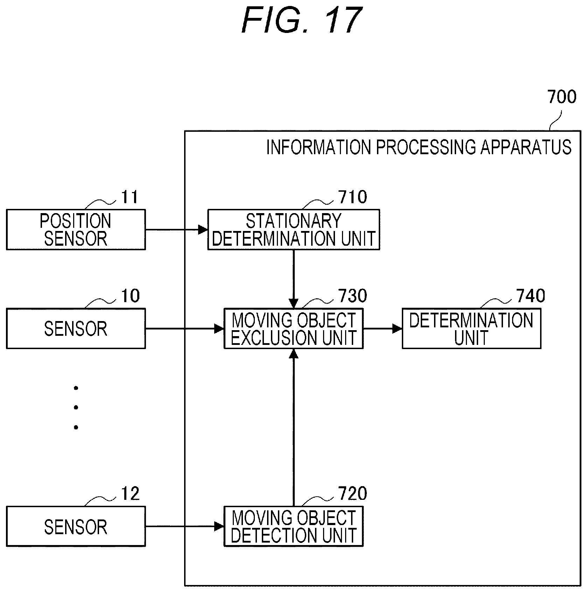

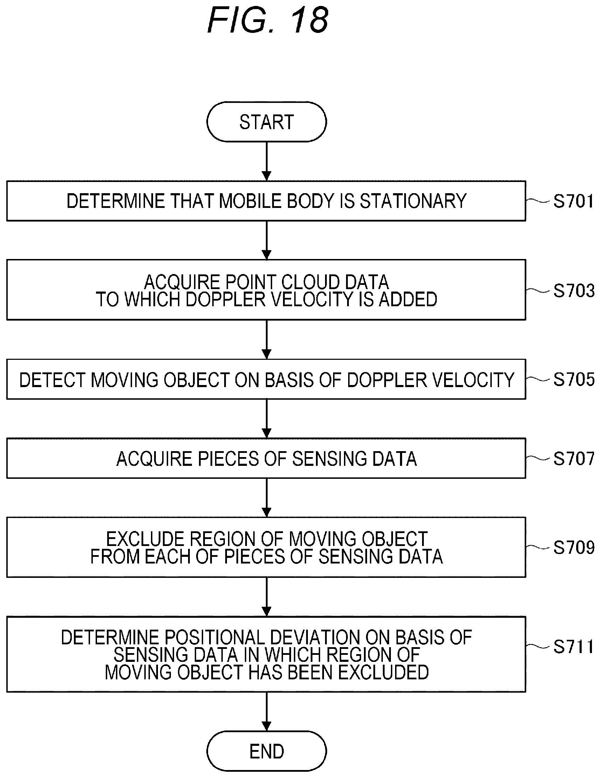

Next, a seventh embodiment of the present disclosure will be described with reference to Figs. 17 and 18. Fig. 17 is a block diagram illustrating a functional configuration of an information processing apparatus 700 according to the seventh embodiment. Fig. 18 is a flowchart illustrating a flow of an operation of the information processing apparatus 700 according to the seventh embodiment.

As illustrated in Fig. 17, the information processing apparatus 700 according to the seventh embodiment includes a stationary determination unit 710, a moving object detection unit 720, a moving object exclusion unit 730, and a determination unit 740. In the seventh embodiment, the plurality of sensors 10 may be, for example, any of LiDAR, Radar, an ultrasonic sensor, or a camera. Furthermore, a sensor 12 is a sensor capable of acquiring a Doppler velocity, and may be, for example, Radar or frequency modulated continuous wave (FMCW)-LiDAR.

The information processing apparatus 700 determines whether or not the mobile body 1 is stationary on the basis of the information regarding a position acquired by a position sensor 11, and detects a moving object present in the environment on the basis of the Doppler velocity acquired by the sensor 12. Accordingly, since the information processing apparatus 700 can exclude the moving object from the sensing data acquired by the sensor 10, it is possible to determine the presence or absence of the positional deviation among the plurality of sensors 10 on the basis of the stationary object in the sensing data. Note that, the presence of the positional deviation among the plurality of sensors 10 indicates that the positional relationship among the plurality of sensors 10 deviates from the known positional relationship.

The position sensor 11 is, for example, a sensor that acquires the information regarding the position of the mobile body 1, such as a global navigation satellite system (GNSS) sensor or an inertial measurement unit (IMU).

The stationary determination unit 710 determines whether or not the mobile body 1 is stationary on the basis of the information regarding the position of the mobile body 1 acquired by the position sensor 11. Specifically, the stationary determination unit 710 may determine whether or not the mobile body 1 is stationary on the basis of a variation amount of the position of the mobile body 1 acquired by the position sensor 11 or a speed or an acceleration of the mobile body 1.

The sensor 12 is a sensor that measures a distance or a direction to an object by measuring a reflected wave of light or a radio wave emitted toward the object, and measures a relative speed or a displacement amount of the object by observing a change in frequency of the reflected wave due to a Doppler effect. For example, the sensor 12 can acquire the point cloud data of the environment to which the Doppler velocity indicating the relative speed or displacement amount with respect to the mobile body 1 is added. As described above, the sensor 12 may be Radar or FMCW-LiDAR.

The moving object detection unit 720 detects the moving object in the environment on the basis of the Doppler velocity acquired by the sensor 12. Specifically, the moving object detection unit 720 detects a point having a speed with respect to the mobile body 1 from the point cloud data acquired by the sensor 12 on the basis of the Doppler velocity. The point having the speed with respect to the mobile body 1 can be regarded as a point moving with respect to the environment in a case where the stationary determination unit 710 determines that the mobile body 1 is stationary. Therefore, the moving object detection unit 720 can detect a group of points having a speed with respect to the mobile body 1, as the moving object in the environment.

The moving object exclusion unit 730 excludes a region of the moving object detected by the moving object detection unit 720 from the pieces of sensing data acquired by the plurality of sensors 10. Specifically, the moving object exclusion unit 730 excludes a region of the group of points having the speed with respect to the mobile body 1 detected by the moving object detection unit 720 from the pieces of sensing data acquired by the plurality of sensors 10. Therefore, pieces of sensing data from which the region of the group of points detected by the moving object detection unit 720 is excluded are pieces of data from which the moving object in the environment has been excluded and which include only the stationary object.

The determination unit 740 determines the presence or absence of the positional deviation among the plurality of sensors 10 on the basis of the pieces of sensing data from which the moving object has been excluded. Specifically, after being acquired by each of the plurality of sensors 10, the determination unit 740 determines the presence or absence of the positional deviation among the plurality of sensors 10 by comparing feature points in the pieces of sensing data from which the region of the moving object (the group of points having the speed with respect to the mobile body 1) has been excluded. The feature points in the pieces of sensing data from which the moving object has been excluded are stationary feature points extracted from the stationary object in the environment. Therefore, the determination unit 740 can determine the presence or absence of the positional deviation among the plurality of sensors 10 by comparing three-dimensional coordinates of the stationary feature points among the plurality of sensors 10.

Next, the flow of the operation of the information processing apparatus 700 according to the seventh embodiment will be described with reference to Fig. 18.

As illustrated in Fig. 18, first, the stationary determination unit 710 determines a stationary state of the mobile body 1 on the basis of sensing data acquired by the position sensor 11 (S701). Next, the sensor 12 acquires, as the sensing data, the point cloud data to which the Doppler velocity is added (S703). Subsequently, the moving object detection unit 720 detects, as the moving object, the group of points having the speed with respect to the mobile body 1 from the point cloud data acquired by the sensor 12 on the basis of the Doppler velocity acquired by the sensor 12 (S705).

Thereafter, the plurality of sensors 10 acquires the pieces of sensing data (S707). Moreover, the moving object exclusion unit 730 excludes the region of the moving object detected by the moving object detection unit 720 from the pieces of sensing data acquired by the plurality of sensors 10 (S709). Next, the determination unit 740 determines whether or not there is the positional deviation among the plurality of sensors 10 on the basis of the pieces of sensing data from which the region corresponding to the moving object has been excluded (S711). Specifically, the determination unit 740 can determine the presence or absence of the positional deviation among the plurality of sensors 10 by comparing the three-dimensional coordinates of the feature points extracted from the pieces of sensing data from which the region of the moving object has been excluded among the plurality of sensors 10.

According to the above configuration, the information processing apparatus 700 according to the seventh embodiment can determine the positional deviation among the plurality of sensors 10 from the pieces of sensing data of the plurality of sensors 10 by using the stationary determination of the mobile body 1 and the moving object detection in the environment.

### (2.8. Eighth Embodiment)

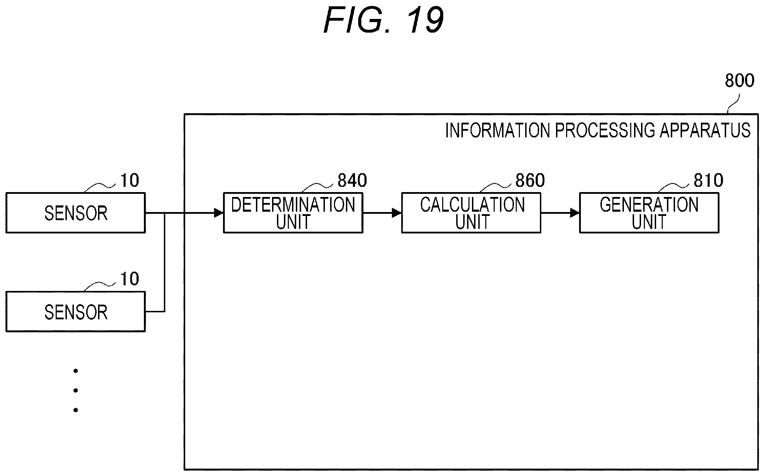

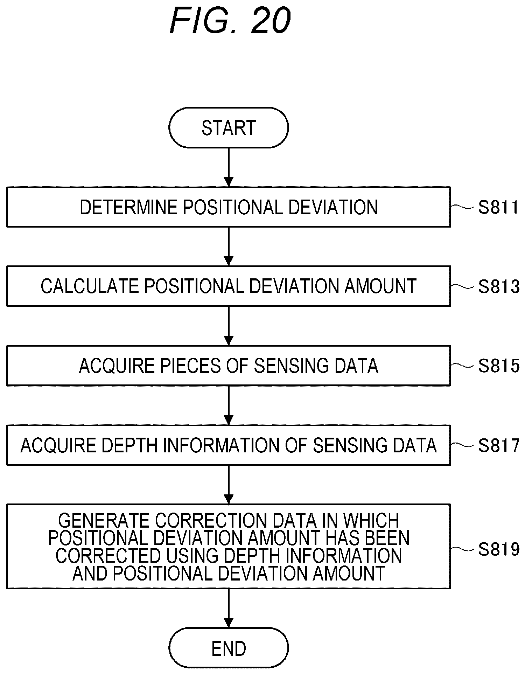

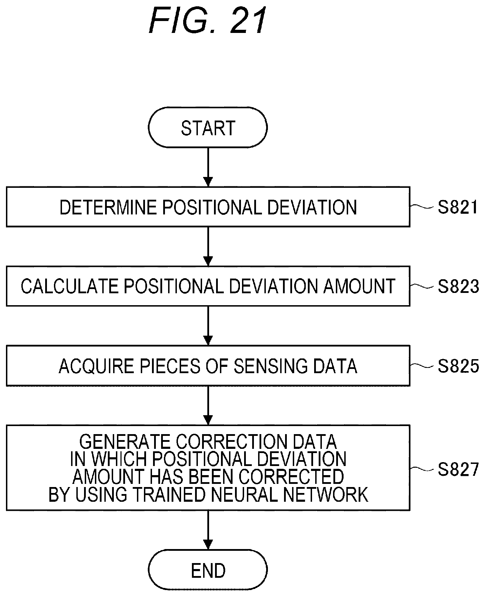

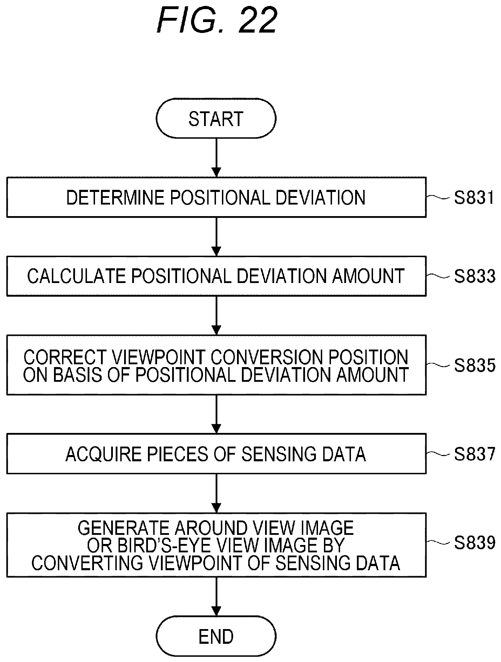

Next, an eighth embodiment of the present disclosure will be described with reference to Figs. 19 to 22. Fig. 19 is a block diagram illustrating a functional configuration of an information processing apparatus 800 according to the eighth embodiment. Fig. 20 is a flowchart illustrating a flow of a first operation of the information processing apparatus 800 according to the eighth embodiment. Fig. 21 is a flowchart illustrating a flow of a second operation of the information processing apparatus 800 according to the eighth embodiment. Fig. 22 is a flowchart illustrating a flow of a third operation of the information processing apparatus 800 according to the eighth embodiment.

As illustrated in Fig. 19, the information processing apparatus 800 according to the eighth embodiment includes a determination unit 840, a calculation unit 860, and a generation unit 810. The plurality of sensors 10 may be, for example, any of LiDAR, Radar, an ultrasonic sensor, or a camera.

In a case where the positional deviation has occurred in the sensor 10, the information processing apparatus 800 corrects the sensing data on the basis of the positional deviation amount of the sensor 10 to correct the positional deviation and generate correction data in which a viewpoint before the positional deviation is reproduced. Note that, the positional deviation of the sensor 10 indicates that the position of the sensor 10 deviates from the known position.

The determination unit 840 determines the presence or absence of the positional deviation of each of the plurality of sensors 10. For example, the determination unit 840 may determine the presence or absence of the positional deviation of each of the plurality of sensors 10 by using the method described in another embodiment or a known method.

The calculation unit 860 calculates the positional deviation amount of the sensor 10 in which the positional deviation has occurred. For example, the calculation unit 860 may calculate the positional deviation amount of the sensor 10 in which the positional deviation has occurred by using the method described in another embodiment or a known method.

The generation unit 810 generates correction data obtained by correcting the positional deviation from the sensing data acquired by the sensor 10 on the basis of the positional deviation amount of the sensor 10 calculated by the calculation unit 860. For example, the generation unit 810 may generate the correction data by converting a viewpoint of the sensing data to the viewpoint before the positional deviation on the basis of the positional deviation amount of the sensor 10.

For example, in a case where the sensor 10 is the LiDAR and can acquire the sensing data including the depth information of the environment, the generation unit 810 may project the sensing data on an angle of view of the viewpoint before the positional deviation on the basis of the depth information of the environment and the calculated positional deviation amount. For example, the generation unit 810 may project the sensing data including the depth information on the angle of view of the viewpoint before the positional deviation by using a method such as warping.

Furthermore, in a case where machine learning is performed in advance with the positional deviation amount of the sensor 10 and sensing data after the positional deviation as inputs and the sensing data before the positional deviation as teaching data, the generation unit 810 may generate the correction data by using a generation model subjected to machine learning. For example, the generation unit 810 may generate the sensing data before the positional deviation by using a neural network that changes the viewpoint of the sensing data after the positional deviation on the basis of the positional deviation amount. Alternatively, the generation unit 810 can generate the sensing data before the positional deviation from the sensing data after the positional deviation by using another machine learning model that changes the viewpoint such as Neural Radiance Fields (NeRF).

Moreover, in a case where an around view image or a bird's-eye view image is generated by viewpoint conversion of the sensing data acquired by the sensor 10, the generation unit 810 may change a viewpoint conversion position at the time of generating the around view image or the bird's-eye view image on the basis of the positional deviation amount of the sensor 10. For example, the generation unit 810 may generate the around view image or the bird's-eye view image in which the positional deviation of the sensor 10 is corrected by correcting the viewpoint conversion position when the around view image or the bird's-eye view image is generated from the sensing data with the positional deviation amount of the sensor 10.

Next, flows of first to third operations of the information processing apparatus 800 according to the eighth embodiment will be described with reference to Figs. 20 to 22.

### (First Operation Example)

As illustrated in Fig. 20, first, the determination unit 840 determines the presence or absence of the positional deviation of the sensor 10 by using the method described in another embodiment or a known method (S811). Subsequently, in a case where the positional deviation has occurred in the sensor 10, the calculation unit 860 calculates the positional deviation amount of the sensor 10 by using the method described in another embodiment or a known method (S813).

Next, the sensor 10 acquires the sensing data (S815). At this time, the acquired sensing data includes depth information of the environment. Therefore, the generation unit 810 acquires the depth information of the environment from the sensing data (S817). Therefore, the generation unit 810 can generate the sensing data before the positional deviation obtained by correcting the positional deviation from the sensing data after the positional deviation as the correction data on the basis of the depth information and the positional deviation amount (S819).

### (Second Operation Example)

As illustrated in Fig. 21, first, similarly to the first operation example, the determination unit 840 determines the presence or absence of the positional deviation of the sensor 10 by using the method described in another embodiment or a known method (S821). Subsequently, in a case where the positional deviation has occurred in the sensor 10, the calculation unit 860 calculates the positional deviation amount of the sensor 10 by using the method described in another embodiment or a known method (S823).

Next, the sensor 10 acquires the sensing data (S825). The generation unit 810 can generate, as the correction data, the sensing data in which the positional deviation amount has been corrected by using the acquired sensing data and the trained neural network that changes the viewpoint on the basis of the positional deviation amount (S827).

### (Third Operation Example)

As illustrated in Fig. 22, first, similarly to the first operation example, the determination unit 840 determines the presence or absence of the positional deviation of the sensor 10 by using the method described in another embodiment or a known method (S831). Subsequently, in a case where the positional deviation has occurred in the sensor 10, the calculation unit 860 calculates the positional deviation amount of the sensor 10 by using the method described in another embodiment or a known method (S833). Here, the generation unit 810 corrects the viewpoint conversion position when the around view image or the bird's-eye view image is generated from the sensing data on the basis of the calculated positional deviation amount (S835).

Next, the sensor 10 acquires the sensing data (S837). The generation unit 810 can generate the around view image or the bird's-eye view image similar to that before the positional deviation by converting the viewpoint of the sensing data by using the corrected viewpoint conversion position (S839).

According to the above configuration, in a case where the positional deviation has occurred in the sensor 10, the information processing apparatus 800 according to the eighth embodiment can generate the sensing data before the positional deviation by correcting the sensing data after the positional deviation acquired by the sensor 10 with the positional deviation amount. Accordingly, the information processing apparatus 800 can prevent the viewpoint of the sensing data from changing due to the positional deviation of the sensor 10 and recognition performance of the sensing data from decreasing in a recognition task in a subsequent stage.

### (2.9. Ninth Embodiment)

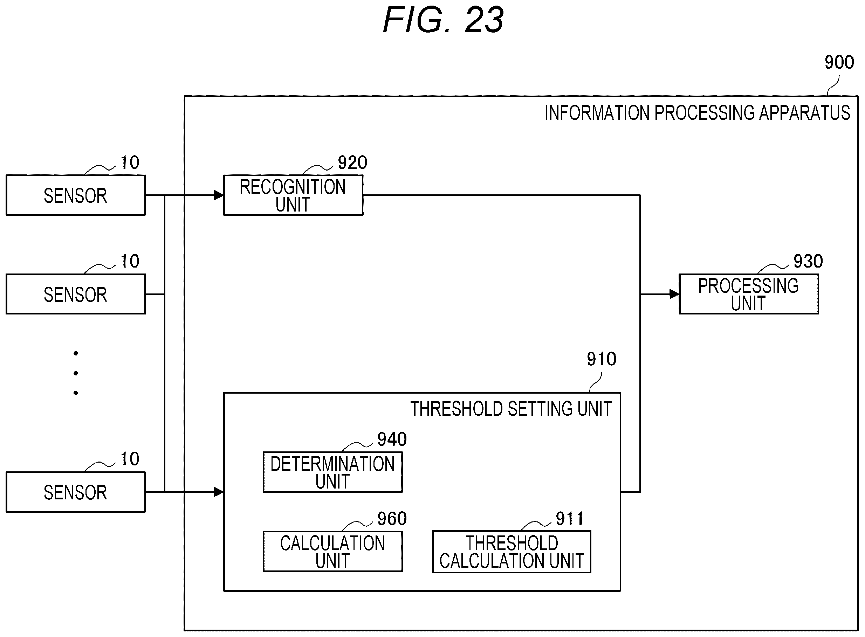

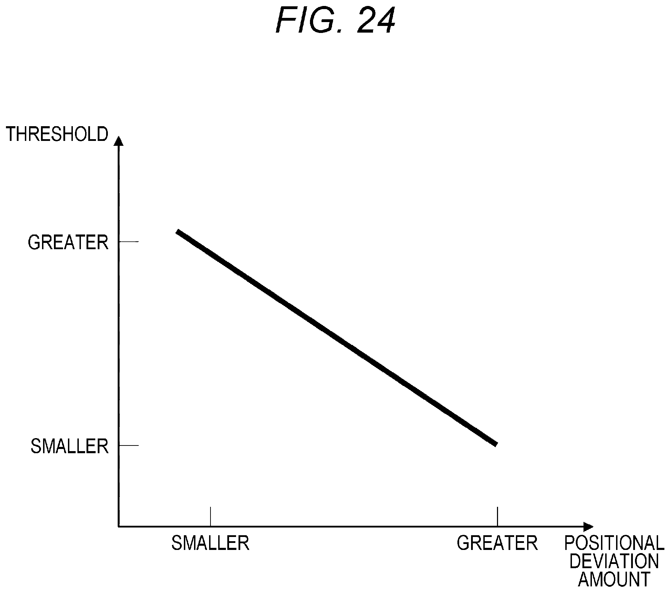

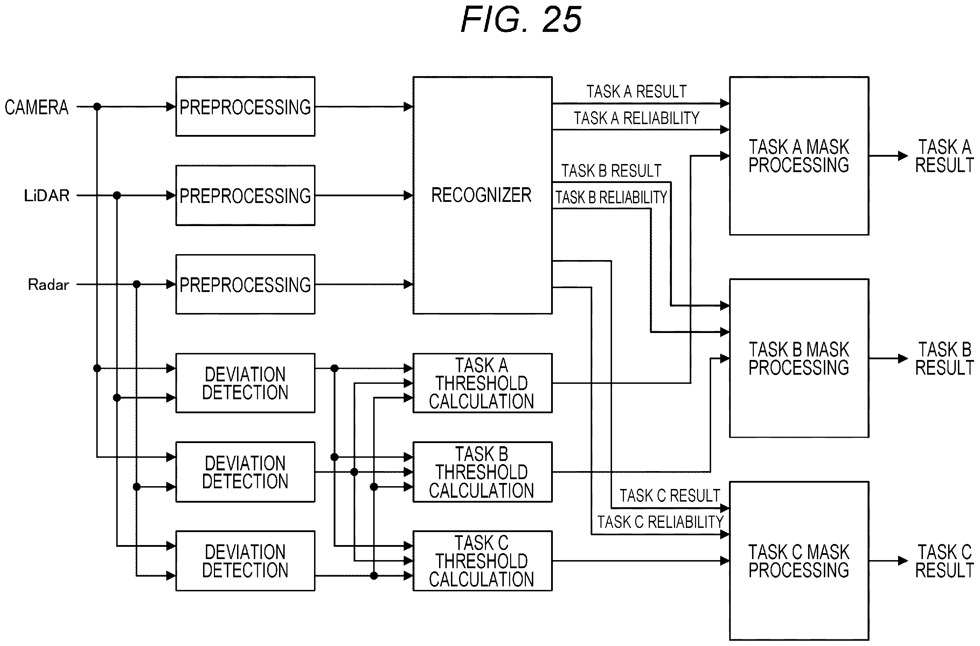

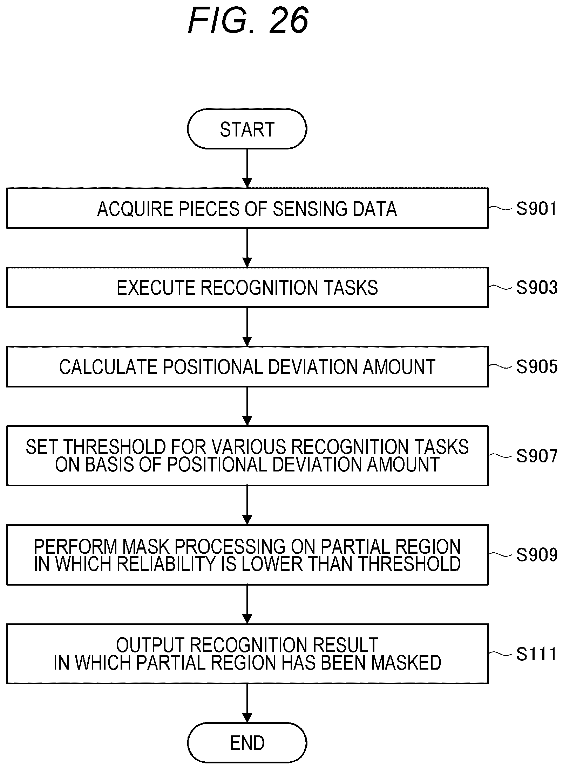

Next, a ninth embodiment of the present disclosure will be described with reference to Figs. 23 to 26. Fig. 23 is a block diagram illustrating a functional configuration of an information processing apparatus 900 according to the ninth embodiment. Fig. 24 is a graph schematically representing a relationship between a positional deviation amount of the sensor 10 and a threshold of mask processing. Fig. 25 is a block diagram illustrating a flow of various types of processing by the information processing apparatus 900. Fig. 26 is a flowchart illustrating a flow of an operation of the information processing apparatus 900 according to the ninth embodiment.

As illustrated in Fig. 23, the information processing apparatus 900 according to the ninth embodiment includes a threshold setting unit 910, a recognition unit 920, and a processing unit 930.

In a case where the positional deviation has occurred in the sensor 10, the information processing apparatus 900 performs the mask processing on a partial region determined to have low reliability in a recognition result of the recognition task performed on the sensing data acquired by the sensor 10. Accordingly, since the information processing apparatus 900 can invalidate a region where the reliability has decreased due to the positional deviation of the sensor 10 by the mask processing, it is possible to suppress the positional deviation of the sensor 10 from influencing the determination using the recognition result in the subsequent stage. Therefore, the information processing apparatus 900 can reduce the influence by the positional deviation of the sensor 10. Note that, the mask processing means invalidating the data present in the masked region so as not to be used in subsequent processing.

The recognition unit 920 executes various recognition tasks using the sensing data acquired by the plurality of sensors 10. Specifically, the recognition unit 920 integrates the pieces of sensing data acquired by the plurality of sensors 10, and executes various recognition tasks on the integrated data. For example, the recognition unit 920 may execute a recognition task such as object detection, segmentation, depth estimation, optical flow estimation, or object motion estimation. Furthermore, the recognition unit 920 may perform preprocessing such as distortion removal on the pieces of sensing data acquired by the plurality of sensors 10 before executing various recognition tasks.

The recognition unit 920 can derive the recognition result of the recognition task and the reliability of the recognition task by executing various recognition tasks using the sensing data. The reliability of the recognition task is derived, for example, for every pixel or region of the sensing data.

In a case where the positional deviation has occurred in the sensor 10, the threshold setting unit 910 sets a threshold for performing the mask processing on the recognition result of the recognition task on the basis of at least the positional deviation amount. Specifically, the threshold setting unit 910 includes a determination unit 940, a calculation unit 960, and a threshold calculation unit 911.

The determination unit 940 determines the presence or absence of the positional deviation of each of the plurality of sensors 10. For example, the determination unit 940 may determine the presence or absence of the positional deviation of each of the plurality of sensors 10 by using the method described in another embodiment or a known method.

The calculation unit 960 calculates the positional deviation amount of the sensor 10 in which the positional deviation has occurred. For example, the calculation unit 960 may calculate the positional deviation amount of the sensor 10 in which the positional deviation has occurred by using the method described in another embodiment or a known method.

The threshold calculation unit 911 calculates, on the basis of the positional deviation amount of the sensor 10, a threshold of the reliability of the mask processing on the recognition result of the recognition task executed on the sensing data acquired by the sensor 10 in which the positional deviation has occurred. For example, as illustrated in Fig. 24, the threshold calculation unit 911 may calculate the threshold of the reliability of the mask processing so as to be a linear function of a negative slope with respect to the positional deviation amount of the sensor 10. That is, the threshold calculation unit 911 may set the threshold of the reliability of the mask processing to be lower as the positional deviation amount of the sensor 10 increases. Accordingly, the threshold calculation unit 911 can decrease the threshold of the reliability of the mask processing such that a wider range of the recognition result is masked as the positional deviation amount of the sensor 10 increases.

Furthermore, the threshold calculation unit 911 may calculate the threshold of the reliability of the mask processing of the recognition result on the basis of the type of the sensor 10 in which the positional deviation has occurred and the type of the recognition task executed on the sensing data. Specifically, the threshold calculation unit 911 may calculate the threshold of the reliability of the mask processing on the basis of a degree of influence of the sensing data acquired by the sensor 10 in which the positional deviation has occurred on the recognition result of the recognition task.

For example, the sensing data by the LiDAR has a high degree of contribution to a recognition task of depth estimation. Therefore, in a case where the positional deviation has occurred in the LiDAR, the threshold calculation unit 911 may lower the threshold of the reliability of the mask processing such that a wider range of the recognition result of the depth estimation is masked. Furthermore, the sensing data by the Radar has a high degree of contribution to a recognition task of object motion estimation. Therefore, in a case where the positional deviation has occurred in the Radar, the threshold calculation unit 911 may further reduce the threshold of the mask processing such that a wider range of the recognition result of the object motion estimation is masked.

The processing unit 930 performs the mask processing on a partial region of the recognition result of the recognition task on the basis of the reliability of the recognition task executed by the recognition unit 920 and the threshold of the reliability set by the threshold setting unit 910. Specifically, the processing unit 930 performs the mask processing on a partial region in which the reliability of the recognition task is lower than the reliability threshold in the recognition result of the recognition task. As described above, the reliability of the recognition task is derived for every pixel or region of the sensing data. Therefore, the processing unit 930 can mask the recognition result of the recognition task for every pixel or region.

Furthermore, the processing unit 930 may limit a partial region in which the mask processing is performed to a region where the pieces of sensing data acquired by the plurality of sensors 10 are superimposed on each other. Specifically, the processing unit 930 may perform the mask processing on a partial region in which the reliability of the recognition task is lower than the reliability threshold in the region in which the pieces of sensing data acquired by the plurality of sensors 10 are superimposed on each other. This is because the influence of overlapping deviation due to the positional deviation among the plurality of sensors 10 increases in the region where the pieces of sensing data are superimposed on each other, but the influence of the overlapping deviation among the plurality of sensors 10 is almost eliminated in the region where the pieces of sensing data are not superimposed on each other. Therefore, the processing unit 930 may omit the mask processing in the region where the pieces of sensing data acquired by the plurality of sensors 10 are not superimposed on each other.

Next, the flow of the operation of the information processing apparatus 900 according to the ninth embodiment will be described with reference to Figs. 25 and 26.

As illustrated in Figs. 25 and 26, for example, it is assumed that pieces of sensing data are acquired by a camera, LiDAR, and Radar (S901). The pieces of sensing data acquired by the camera, the LiDAR, and the Radar are integrated after being preprocessed, and various recognition tasks (tasks A, B, and C in Fig. 25) are executed by the recognition unit 920 (S903).

Specifically, preprocessing such as lens distortion removal may be performed on the image sensed by the camera. Preprocessing such as motion compensation of the point cloud and distortion removal may be performed on the point cloud data sensed by the LiDAR. Preprocessing such as generation of point cloud data and calculation of motion information based on the Doppler velocity may be performed on the sensing data sensed by the Radar. For the sensing data integrated after the preprocessing, various recognition tasks are executed by the recognition unit 920 by recognition inference processing using a trained multi-modal or multi-task network.

Subsequently, the threshold setting unit 910 calculates the positional deviation amount among the camera, the LiDAR, and the Radar (S905). Specifically, the determination unit 940 determines the presence or absence of the positional deviation between two of the camera, the LiDAR, and the Radar. Thereafter, the calculation unit 960 calculates the positional deviation amount between two of the camera, the LiDAR, and the Radar determined to have the positional deviation.

Moreover, the threshold setting unit 910 calculates the threshold of the reliability for each of the various recognition tasks on the basis of the positional deviation amount (S907). Specifically, the threshold calculation unit 911 calculates the threshold of the reliability of the mask processing on the recognition results of various recognition tasks on the basis of the positional deviation amount between two of the camera, the LiDAR, and the Radar.

Thereafter, the processing unit 930 performs the mask processing on a partial region in which the reliability is lower than the threshold among the recognition results of the various recognition tasks (S909). Specifically, the processing unit 930 compares the reliability derived for every pixel, point of the point cloud, or region of the recognition task with the threshold of the reliability set for every recognition task by the threshold setting unit 910, and performs the mask processing on the pixel, point of the point cloud, or region having the reliability lower than the threshold.

Therefore, the information processing apparatus 900 can output the recognition result in which the partial region is masked on the basis of the reliability for every task of the various recognition tasks (S911). Since the data present in the pixel, the point of the point cloud, or the region in which the mask processing is performed is invalidated, the information processing apparatus 900 can suppress the recognition result with the decreased reliability due to the positional deviation of the sensor 10 from influencing the determination in the subsequent stage.

According to the above configuration, since the information processing apparatus 900 according to the ninth embodiment can invalidate the recognition result in which the reliability is decreased due to the positional deviation of the sensor 10 by the mask processing, it is possible to suppress the positional deviation of the sensor 10 from influencing the subsequent determination.

### (2.10. Tenth Embodiment)

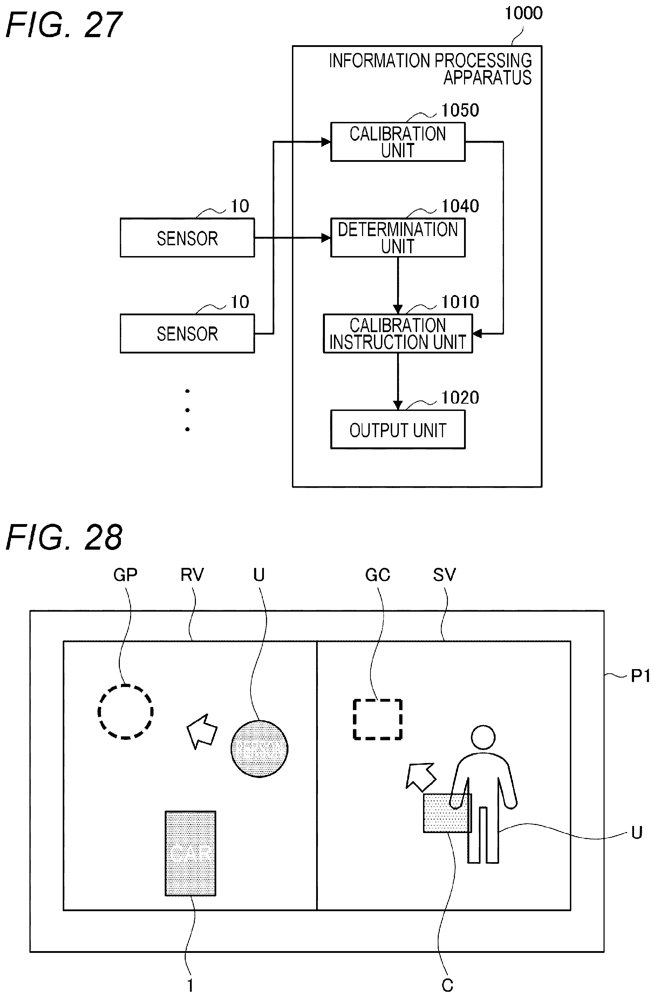

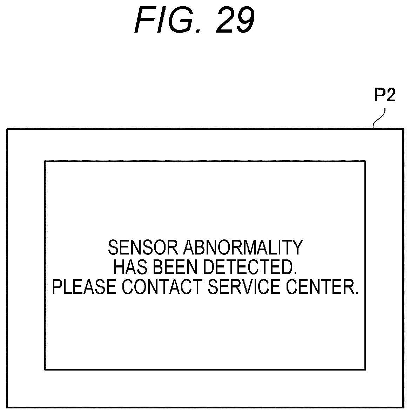

Next, a tenth embodiment of the present disclosure will be described with reference to Figs. 27 to 29. Fig. 27 is a block diagram illustrating a functional configuration of an information processing apparatus 1000 according to the tenth embodiment. Fig. 28 is an explanatory diagram illustrating an example of an image P1 notified from an output unit 1020 to the user. Fig. 29 is an explanatory diagram illustrating an example of an image P2 notified from the output unit 1020 to the user.

As illustrated in Fig. 27, the information processing apparatus 1000 according to the tenth embodiment includes a determination unit 1040, a calibration unit 1050, a calibration instruction unit 1010, and the output unit 1020. The plurality of sensors 10 may be, for example, any of LiDAR, Radar, an ultrasonic sensor, or a camera.

In a case where the positional deviation has occurred in the sensor 10, the information processing apparatus 1000 instructs the user to perform the work for calibrating the positional relationship among the plurality of sensors 10. Therefore, the information processing apparatus 1000 can calibrate the positional relationship among the plurality of sensors 10 by using the sensing data obtained by sensing the work performed by the user. Note that, the presence of the positional deviation among the plurality of sensors 10 indicates that the positional relationship among the plurality of sensors 10 deviates from the known positional relationship.

The determination unit 1040 determines the presence or absence of the positional deviation of each of the plurality of sensors 10. For example, the determination unit 1040 may determine the presence or absence of the positional deviation of each of the plurality of sensors 10 by using the method described in another embodiment or a known method.

The calibration instruction unit 1010 generates an image, text, voice, or a combination thereof that instructs the user to perform the work for calibrating the plurality of sensors 10. For example, the calibration instruction unit 1010 may generate an image that instructs the user to present the calibration chart at the predetermined position. For example, the calibration instruction unit 1010 may generate the image illustrated in Fig. 28 or 29.

As illustrated in Fig. 28, the calibration instruction unit 1010 may generate the image P1 including a bird's-eye view image RV and a camera image SV sensed by the sensor 10 mounted on the mobile body 1.

The bird's-eye view image RV is an image obtained by projecting the sensing data of the sensor 10 such as LiDAR such that the positional relationship between the mobile body 1 and a user U is viewed from above. The calibration instruction unit 1010 may superimpose a target point GP to which the user U carrying a calibration chart C is headed on the bird's-eye view image RV. Furthermore, the camera image SV is an image obtained by imaging the user U existing in front of the mobile body 1 by the sensor 10 such as a camera. The calibration instruction unit 1010 may superimpose, on the camera image SV, a target region GC for presenting the calibration chart C to the sensor 10.

The calibration instruction unit 1010 can instruct a position where the calibration chart C is to be presented to the user U by instructing a three-dimensional position where the calibration chart C is to be presented from a sky direction and a horizontal direction by using the bird's-eye view image RV and the camera image SV. The information processing apparatus 1000 can calibrate the positional relationship among the plurality of sensors 10 by causing the user to present such a calibration chart C a plurality of times.

On the other hand, in a case where it is difficult for the user to perform the work for calibrating the plurality of sensors 10, the calibration instruction unit 1010 may generate the image P2 for instructing to contact a service center as illustrated in Fig. 29.

The output unit 1020 presents the contents of the work for calibrating the plurality of sensors 10 to the user by outputting the image, the text, or the voice generated by the calibration instruction unit 1010. The output unit 1020 may be, for example, a display device that outputs the image or text, a sound output device that outputs the voice, or a communication device that transmits the image, text, or voice to a terminal device possessed by the user.

The calibration unit 1050 calibrates the positional relationship among the plurality of sensors 10 by using the pieces of sensing data acquired by the plurality of sensors 10. Specifically, the calibration unit 1050 calibrates the positional relationship among the plurality of sensors 10 by using the sensing data of the contents of the work performed by the user according to the instruction output from the output unit 1020. For example, the calibration unit 1050 may calibrate the positional relationship among the plurality of sensors 10 by using three-dimensional coordinates in the sensing data of the calibration chart presented at the predetermined position by the user.

According to the above configuration, in a case where the positional deviation has occurred in the sensor 10, the information processing apparatus 1000 according to the tenth embodiment can notify the user of the occurrence of the positional deviation of the sensor 10 and the contents of the work for calibrating the positional relationship between the sensors 10.

### <3. Hardware Configuration Example>

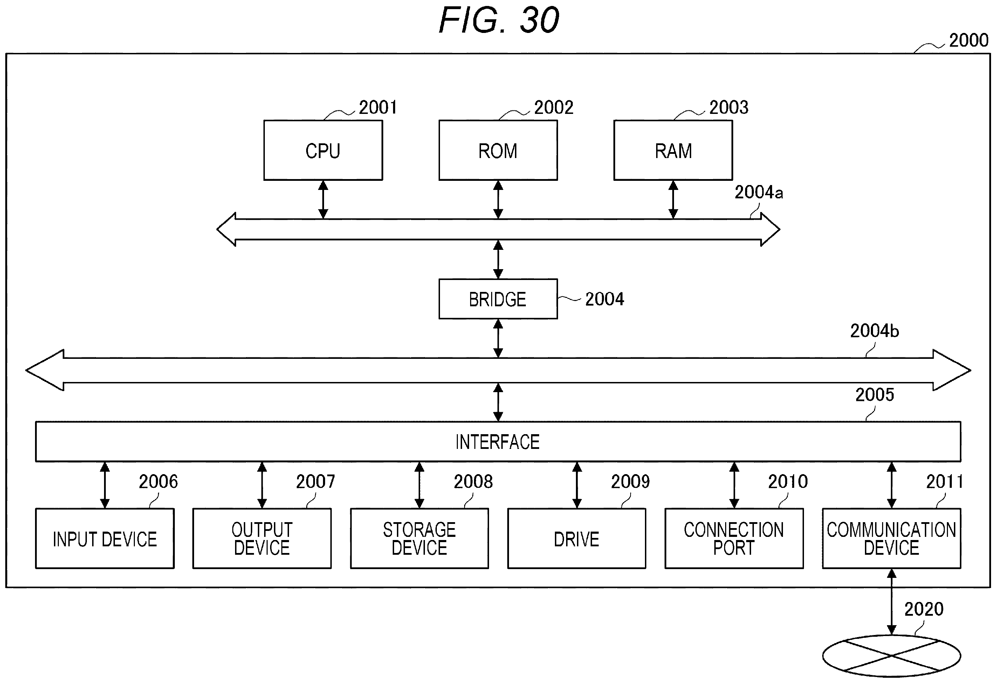

Moreover, a configuration example of a computer 2000 that realizes the information processing apparatuses 100, 200, 300, 400, 500, 600, 700, 800, 900 and 1000 according to the embodiments of the present disclosure will be described with reference to Fig. 30. Fig. 30 is a block diagram illustrating the configuration example of the computer 2000.

Functions of the computer 2000 can be realized by cooperation of software and hardware to be described below. Each function of detection, arithmetic operation, determination, control, or processing in each embodiment of the present disclosure may be executed by, for example, a CPU 2001.

As illustrated in Fig. 30, the computer 2000 includes the central processing unit (CPU) 2001, a read only memory (ROM) 2002, and a random access memory (RAM) 2003.

Furthermore, the computer 2000 may further include a host bus 2004a, a bridge 2004, an external bus 2004b, an interface 2005, an input device 2006, an output device 2007, a storage device 2008, a drive 2009, a connection port 2010, or a communication device 2011. The computer 2000 may include a processing circuit such as a digital signal processor (DSP) or an application specific integrated circuit (ASIC) instead of the CPU 2001 or together with the CPU 2001.

The CPU 2001 functions as an arithmetic processing device or a control device, and controls an operation in the computer 2000 according to various programs recorded on a removable recording medium mounted on the ROM 2002, the RAM 2003, the storage device 2008, or the drive 2009. The ROM 2002 stores programs used by the CPU 2001, arithmetic parameters, and the like. The RAM 2003 temporarily stores programs used in the execution of the CPU 2001, parameters used in the execution, and the like.

The CPU 2001, the ROM 2002, and the RAM 2003 are mutually connected by the host bus 2004a capable of performing high-speed data transmission. The host bus 2004a is connected to the external bus 2004b such as a peripheral component interconnect/interface bus via the bridge 2004, and the external bus 2004b is connected to various constituent elements via the interface 2005.

The input device 2006 is, for example, a device that receives an input from the user, such as a mouse, a keyboard, a touch panel, a button, a switch, or a lever. Note that, the input device 2006 may be a microphone or the like that detects the user's voice. The input device 2006 may be, for example, a remote control device using infrared rays or other radio waves, or may be an external connection device compatible with the operation of the computer 2000.

The input device 2006 further includes an input control circuit that outputs an input signal generated on the basis of information input by the user to the CPU 2001. The user can input various types of data or instruct a processing operation to the computer 2000 by operating the input device 2006.

The output device 2007 is a device capable of visually or aurally presenting information acquired or generated by the computer 2000 to the user. The output device 2007 may be, for example, a display device such as a liquid crystal display (LCD), a plasma display panel (PDP), an organic light-emitting diode (OLED) display, a hologram, or a projector, a sound output device such as a speaker or a headphone, or a printing device such as a printer device. The output device 2007 can output information obtained by the processing of the computer 2000, as a video such as a text or an image, or a sound such as voice or audio.

The storage device 2008 is a data storage device configured as an example of a storage unit of the computer 2000. The storage device 2008 may include, for example, a magnetic storage device such as a hard disk drive (HDD), a semiconductor storage device, an optical storage device, a magneto-optical storage device, or the like. The storage device 2008 can store programs executed by the CPU 2001, various types of data, various types of data acquired from the outside, or the like.

The drive 2009 is a reading or writing device for a removable recording medium such as a magnetic disk, an optical disk, a magneto-optical disk, or a semiconductor memory, and is built in or externally attached to the computer 2000. For example, the drive 2009 can read information recorded in the attached removable recording medium and output the information to the RAM 2003. Furthermore, the drive 2009 can write a record in the attached removable recording medium.

The connection port 2010 is a port for directly connecting an external connection device to the computer 2000. The connection port 2010 may be, for example, a universal serial bus (USB) port, an IEEE13204 port, a small computer system interface (SCSI) port, or the like. Furthermore, the connection port 2010 may be an RS-232C port, an optical audio terminal, a high-definition multimedia interface (HDMI) (registered trademark) port, or the like. The connection port 2010 is connected to an external connection device, and thus, various types of data can be transmitted and received between the computer 2000 and the external connection device.

The communication device 2011 is, for example, a communication interface including a communication device or the like for connection with a communication network 2020. The communication device 2011 may be, for example, a communication card for wired or wireless local area network (LAN), Wi-Fi (registered trademark), Bluetooth (registered trademark), or wireless USB (WUSB). Furthermore, the communication device 2011 may be a router for optical communication, a router for asymmetric digital subscriber line (ADSL), a modem for various types of communication, or the like.

The communication device 2011 can transmit and receive signals and the like by using a predetermined protocol such as TCP/IP to and from the Internet or another communication device, for example. Furthermore, the communication network 2020 connected to the communication device 2011 is a network connected in a wired or wireless manner, and may be, for example, an Internet communication network, a home LAN, an infrared communication network, a radio wave communication network, a satellite communication network, or the like.

Note that, it is also possible to create a program for causing hardware such as the CPU 2001, the ROM 2002, and the RAM 2003 built in the computer 2000 to exhibit functions equivalent to those of the information processing apparatuses 100, 200, 300, 400, 500, 600, 700, 800, 900 and 1000 described above. Furthermore, a computer-readable recording medium in which the program is recorded can also be provided.

While the preferred embodiments of the present disclosure have been described in detail with reference to the accompanying drawings, the technical scope of the present disclosure is not limited to such examples. It is obvious that a person having ordinary knowledge in the technical field of the present disclosure can conceive various changes or modifications within the scope of the technical idea described in the claims, and it is naturally understood that these also belong to the technical scope of the present disclosure.

Furthermore, the effects described in the present specification are merely illustrative or exemplary, and are not restrictive. That is, the technology according to an embodiment of the present disclosure can exhibit other effects apparent to those skilled in the art from the description of the present specification, in addition to the effects described above or instead of the effects described above.

Note that, the following configurations also belong to the technical scope of the present disclosure.
(1) An information processing apparatus including:
   a calculation unit that calculates a positional deviation amount of each of a plurality of sensors of different types;
   a recognition unit that executes a recognition task by integrating pieces of sensing data acquired by the plurality of sensors; and
   a processing unit that performs mask processing on a partial region of a recognition result of the recognition task on the basis of the positional deviation amount.
(2) The information processing apparatus according to the above (1), in which the processing unit performs the mask processing on a region in which reliability of the recognition result is lower than a threshold based on the positional deviation amount.
(3) The information processing apparatus according to the above (2), in which the threshold is set further on the basis of a type of the recognition task and a type of the sensor for which the positional deviation amount has been calculated.
(4) The information processing apparatus according to any one of the above (1) to (3), further including:
   a generation unit that generates correction data obtained by correcting the positional deviation amount from the sensing data on the basis of the positional deviation amount.
(5) The information processing apparatus according to the above (4), in which the generation unit generates the correction data by performing viewpoint conversion on the sensing data on the basis of the positional deviation amount.
(6) The information processing apparatus according to any one of the above (1) to (5), further including:
   a determination unit that determines presence or absence of positional deviations of the plurality of sensors.
(7) The information processing apparatus according to the above (6), in which the determination unit determines the presence or absence of the positional deviations of the plurality of sensors by comparing the pieces of sensing data from which a region corresponding to a moving object has been excluded with each other.
(8) The information processing apparatus according to the above (7), in which the region corresponding to the moving object is determined on the basis of a Doppler velocity detected by Radar.
(9) The information processing apparatus according to the above (6), in which the determination unit determines the presence or absence of the positional deviations of the plurality of sensors by comparing regions of a stationary object included in the pieces of sensing data with each other.
(10) The information processing apparatus according to the above (6), in which the determination unit determines the presence or absence of the positional deviations of the plurality of sensors by performing matching between straight lines detected from the pieces of sensing data.
(11) The information processing apparatus according to the above (6), in which the determination unit determines the presence or absence of the positional deviations of the plurality of sensors on the basis of a connection deviation when the pieces of sensing data are continuously connected.
(12) The information processing apparatus according to any one of the above (6) to (11), further including:
   a calibration unit that calibrates a positional relationship among the plurality of sensors.
(13) The information processing apparatus according to the above (12), in which the calibration unit calibrates the positional relationship among the plurality of sensors by using coordinates of joint points of a person included in the pieces of sensing data.
(14) The information processing apparatus according to the above (12),
   in which the plurality of sensors is mounted on a mobile body, and
   the calibration unit calibrates the positional relationship among the plurality of sensors on the basis of traveling trajectories of the mobile body estimated from the pieces of sensing data.
(15) The information processing apparatus according to any one of the above (6) to (14), further including:
   a notification unit that notifies a user of information regarding the positional deviations of the plurality of sensors.
(16) The information processing apparatus according to the above (1), further including:
   a synchronization control unit that adjusts sensing timings of the plurality of sensors on the basis of imaged images of a plurality of light-emitting units that emits light rays in synchronization with the sensing timings of the plurality of sensors.
(17) An information processing method by a computer, including:
   calculating a positional deviation amount of each of a plurality of sensors of different types;
   executing a recognition task by integrating pieces of sensing data acquired by the plurality of sensors; and
   performing mask processing on a partial region of a recognition result of the recognition task on the basis of the positional deviation amount.
(18) A program for causing a computer to function as:
   a calculation unit that calculates a positional deviation amount of each of a plurality of sensors of different types;
   a recognition unit that executes a recognition task by integrating pieces of sensing data acquired by the plurality of sensors; and
   a processing unit that performs mask processing on a partial region of a recognition result of the recognition task on the basis of the positional deviation amount.

### REFERENCE SIGNS LIST

- 1: Mobile body
- 10: Sensor
- 20: Light-emitting unit
- 100, 200, 300, 400, 500, 600, 700, 800, 900, 1000: Information processing apparatus
- 110: Difference detection unit
- 120: Storage unit
- 130, 210, 310: Projection processing unit
- 220: Straight line detection unit
- 410: Notification unit
- 420, 620: Parameter storage unit
- 510: Light emission control unit
- 520: Synchronization control unit
- 610: Position estimation unit
- 630: Trajectory storage unit
- 710: Stationary determination unit
- 720: Moving object detection unit
- 730: Moving object exclusion unit
- 810: Generation unit
- 860: Calculation unit
- 910: Threshold setting unit
- 911: Threshold calculation unit
- 920: Recognition unit
- 930: Processing unit
- 960: Calculation unit
- 140, 240, 340, 440, 740, 840, 940, 1040: Determination unit
- 250, 450, 650, 1050: Calibration unit
- 1010: Calibration instruction unit
- 1020: Output unit

## Claims

1. An information processing apparatus comprising:
a calculation unit that calculates a positional deviation amount of each of a plurality of sensors of different types;
a recognition unit that executes a recognition task by integrating pieces of sensing data acquired by the plurality of sensors; and
a processing unit that performs mask processing on a partial region of a recognition result of the recognition task on a basis of the positional deviation amount.

2. The information processing apparatus according to claim 1, wherein the processing unit performs the mask processing on a region in which reliability of the recognition result is lower than a threshold based on the positional deviation amount.

3. The information processing apparatus according to claim 2, wherein the threshold is set further on a basis of a type of the recognition task and a type of the sensor for which the positional deviation amount has been calculated.

4. The information processing apparatus according to claim 1, further comprising:
a generation unit that generates correction data obtained by correcting the positional deviation amount from the sensing data on a basis of the positional deviation amount.

5. The information processing apparatus according to claim 4, wherein the generation unit generates the correction data by performing viewpoint conversion on the sensing data on a basis of the positional deviation amount.

6. The information processing apparatus according to claim 1, further comprising:
a determination unit that determines presence or absence of positional deviations of the plurality of sensors.

7. The information processing apparatus according to claim 6, wherein the determination unit determines the presence or absence of the positional deviations of the plurality of sensors by comparing the pieces of sensing data from which a region corresponding to a moving object has been excluded with each other.

8. The information processing apparatus according to claim 7, wherein the region corresponding to the moving object is determined on a basis of a Doppler velocity detected by Radar.

9. The information processing apparatus according to claim 6, wherein the determination unit determines the presence or absence of the positional deviations of the plurality of sensors by comparing regions of a stationary object included in the pieces of sensing data with each other.

10. The information processing apparatus according to claim 6, wherein the determination unit determines the presence or absence of the positional deviations of the plurality of sensors by performing matching between straight lines detected from the pieces of sensing data.

11. The information processing apparatus according to claim 6, wherein the determination unit determines the presence or absence of the positional deviations of the plurality of sensors on a basis of a connection deviation when the pieces of sensing data are continuously connected.

12. The information processing apparatus according to claim 6, further comprising:
a calibration unit that calibrates a positional relationship among the plurality of sensors.

13. The information processing apparatus according to claim 12, wherein the calibration unit calibrates the positional relationship among the plurality of sensors by using coordinates of joint points of a person included in the pieces of sensing data.

14. The information processing apparatus according to claim 12,
wherein the plurality of sensors is mounted on a mobile body, and
the calibration unit calibrates the positional relationship among the plurality of sensors on a basis of traveling trajectories of the mobile body estimated from the pieces of sensing data.

15. The information processing apparatus according to claim 6, further comprising:
a notification unit that notifies a user of information regarding the positional deviations of the plurality of sensors.

16. The information processing apparatus according to claim 1, further comprising:
a synchronization control unit that adjusts sensing timings of the plurality of sensors on a basis of imaged images of a plurality of light-emitting units that emits light rays in synchronization with the sensing timings of the plurality of sensors.

17. An information processing method by a computer, comprising:
calculating a positional deviation amount of each of a plurality of sensors of different types;
executing a recognition task by integrating pieces of sensing data acquired by the plurality of sensors; and
performing mask processing on a partial region of a recognition result of the recognition task on a basis of the positional deviation amount.

18. A program for causing a computer to function as:
a calculation unit that calculates a positional deviation amount of each of a plurality of sensors of different types;
a recognition unit that executes a recognition task by integrating pieces of sensing data acquired by the plurality of sensors; and
a processing unit that performs mask processing on a partial region of a recognition result of the recognition task on a basis of the positional deviation amount.
